(19) **Europäisches Patentamt**
**European Patent Office**
**Office européen des brevets**

(11) **EP 2 631 674 A1**

(12) **EUROPÄISCHE PATENTANMELDUNG**

(43) Veröffentlichungstag:
**28.08.2013 Patentblatt 2013/35**

(51) Int Cl.:
*G01S 17/46* *(2006.01)* *G01S 17/10* *(2006.01)*
*G01S 7/487* *(2006.01)* *G01S 7/497* *(2006.01)*

(21) Anmeldenummer: **12156720.0**

(22) Anmeldetag: **23.02.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **ELMOS Semiconductor AG**
**44227 Dortmund (DE)**

(72) Erfinder: **Burchard, Dr. Bernd**
**45276 Essen (DE)**

(74) Vertreter: **Petirsch, Markus**
**Durm & Partner**
**Patentanwälte**
**Moltkestrasse 45**
**76133 Karlsruhe (DE)**

(54) **Verfahren und Sensorsystem zur Vermessung der Eigenschaften einer Übertragungsstrecke eines Messsystems zwischen Sender und Empfänger**

(57) Verfahren und Sensorsystem zur Vermessung der Übertragungeigenschaften einer ersten Übertragungsstrecke (T1) eines auf einer rückgekoppelten Kompensation beruhenden Messsystems zwischen einem ersten Sender (H1) und einem Empfänger (D1), wobei in dem Empfänger (D1) neben dem ausgestrahlten Sendesignal (I2) des ersten Senders (H1) ein Kompensationssignal (I2) eines Kompensationssenders (K) überlagert empfangen wird. Ein Speisesignal (S5) für den ersten Sender (H1) und ein Empfängerausgangssignal (S1) des Empfängers (D) bilden je einen Vektor in einem Prä-Hilbert-Raum. Mittels des erfindungsgemäßen Verfahrens erfolgt eine Hilbert-Projektion zwischen dem Empfängerausgangssignal (S1) des Empfängers (D) und dem Speisesignal (S5), so dass ein Projektionsbildsignal (S10) erzeugt wird. Aus dem Projektionsbildsignal (S10) wird ein Ausgangssignal (S4) gebildet. Mittels einer zumindest teilweisen Rücktransformation des Ausgangssignals (S4) mit dem Speisesignal (S5) wird ein Vorsignal (S6) erzeugt. Die Rücktransformation erfolgt bevorzugt mittels einer Multiplikation. Ein Kompensationssignal (S3) zum Speisen des Kompensationssenders (K) wird aus dem gebildeten Vorsignal (S6) generiert, um eine rückkoppelnde Regelung des Empfängerausgangssignals (S1) zu erzielen.

Fig. 1

EP 2 631 674 A1

**Beschreibung**

Die vorliegende Erfindung betrifft ein Verfahren und ein Sensorsystem zur Vermessung der Übertragungseigenschaften einer ersten Übertragungsstrecke zwischen einem ersten Sender und einem Empfänger. Der erste Sender sendet ein erstes Signal in die Übertragungsstrecke hinein, das nach Durchgang durch mindestens einen Teil der ersten Übertragungsstrecke von dem Empfänger detektiert wird. Ein zweiter Sender sendet ein zweites Signal in eine zweite Übertragungsstrecke hinein, das von dem Empfänger nach Durchgang durch die zweite Übertragungsstrecke detektiert wird. In dem Empfänger werden das erste Signal und das zweite Signal im Wesentlichen summierend überlagert. Anschließend wird daraus ein Empfängerausgangssignal gebildet, das weiterverarbeitet wird und schließlich dem zweiten Sender in einer Rückkopplungsschleife zur Kompensation zugeführt wird.

In vielen Anwendungsbereichen sollen die Übertragungseigenschaften einer Übertragungsstrecke von einem Sender zu einem Empfänger, beispielsweise einem Sensor, bestimmt werden. Es kann z. B. notwendig sein, die Entfernung eines Bezugsobjekts zu einem anderen Objekt zu bestimmen oder die Bewegung eines Objekts in einem bestimmten Bereich oder Raum zu detektieren. Andere Beispiele sind die Bestimmung grundlegender Eigenschaften des Mediums der Übertragungsstrecke wie beispielsweise Brechungsindex, Absorptionsspektren, Dispersion, Streuung (z. B. Nebelfeststellung), Spin-Relaxationszeiten, elektromagnetische Konstanten wie Dielektrizitätszahl, Permeabilitätszahl und Lichtgeschwindigkeit, Fluoreszenzeigenschaften (Übertragung der Trägerwellenlänge und/ oder -frequenz eines Signals auf eine andere Wellenlänge/Frequenz) oder die Detektion der Eigenschaften von Grenz- und Oberflächen wie Reflektivität, Reflektionsspektrum, Verhältnis der zuvor genannten Eigenschaften zwischen den Medien der Grenzfläche, Abstand der Grenzfläche usw.

Es sind im Stand der Technik zahlreiche kompensierende Verfahren bekannt, bei denen das eigentliche Übertragungssignal mit einem kompensierenden Signal am Empfänger derart überlagert wird, dass der Empfänger in Summe ein nahezu konstantes Signal enthält. Ein derart kompensierendes Messverfahren wird beispielsweise in den folgenden Dokumenten offenbart:

DE 10001955A1
DE 10024156A1
DE 19839730C1
DE 930983U1
DE 10001943C1
DE 10346741B3
DE 102004025345B3
DE 102005013325A1
DE 102005010745B3
DE 102007005187B4

Die in diesen Dokumenten beschriebenen Verfahren verwenden als Sendesignal und/oder als Kompensationssignal ein in der Amplitude geregeltes Analog-Signal. Das Sendesignal hat ein konstantes Tastverhältnis und ist in der Regel im Wesentlichen monofrequent, d. h. es wird nur eine bestimmte Frequenz verwendet.

Das monofrequente, analoge Kompensationssignal erweist sich als wesentlicher Nachteil dieser Verfahren, da das monofrequente Kompensationssignal sehr anfällig für Störungen ist. Beispielsweise hat es sich erwiesen, dass bei optischen Systemen diese zwar nicht durch das mehr oder weniger gleichförmige Sonnenlicht, wohl aber durch das im Mehrfachen der Netzfrequenz von 50Hz oder 60Hz der jeweiligen Landesnetzfrequenz schwankende Licht von Leuchtquellen wie beispielsweise Leuchtstoffröhren und dessen Transienten gestört wird. Erst recht taucht ein Problem auf, wenn mehrere der dort beschriebenen Messsysteme optisch nicht getrennt werden können. Dies kann beispielsweise bei einem optischen Kfz-Radar auf Basis einer der obigen Offenlegungen dann der Fall sein, wenn der Sender eines entgegenkommenden Kfz in den Empfänger des eigenen Kfz einstrahlt. Die obigen Systeme sind hierfür nicht brauchbar.

Somit sind die Systeme nicht ohne weiteres für die Triangulation und komplexere Erkennungsaufgaben unter Verwendung mehrerer Systeme geeignet.

Auch wird der Einsatz derartiger Systeme schwierig, wenn mehrere Übertragungsstrecken oder ein größerer Bereich detektiert oder überwacht werden sollen. Dann wird in der Regel ein Zeitmultiplex-Verfahren angewandt, um die einzelnen Signale zeitlich zu unterscheiden. Dies hat jedoch den Nachteil, dass es zu Verzögerungen bei der Bearbeitung der Signale und bei der Beobachtung des gewünschten Bereichs kommt. Es entstehen zeitliche Lücken bei der räumlichen Beobachtung, die insbesondere bei sicherheitsrelevanten Anwendungen nicht akzeptabel sind.

Ein weiterer Nachteil der Systeme aus der obigen Liste, die eine Abstandbestimmung vornehmen, ist, dass diese bei mehreren Reflektoren nur den mittleren Abstand der Reflektoren bestimmen können.

Aufgabe der Erfindung

Ausgehend von dem bekannten Stand der Technik und den sich ergebenden Problemen liegt der vorliegenden Erfindung die Aufgabe zugrunde, ein optimiertes Verfahren zur Detektion der Übertragungseigenschaften einer Übertragungsstrecke vorzuschlagen, so dass beispielsweise ein in der Übertragungsstrecke vorhandenes Objekt und/oder wichtige Eigenschaften dieses Objektes zuverlässig erkannt werden kann. Dabei soll das Verfahren insbesondere auf einer Kompensation basieren und für Störungen möglichst weitgehend unempfindlich sein.

Lösung der Aufgabe

Gelöst wird die vorliegende Aufgabe durch ein Verfahren zur Vermessung der Übertragungeigenschaften einer Übertragungsstrecke eines Messsystems gemäß den Merkmalen des Anspruchs 1 sowie durch ein Sensorsystem mit den Merkmalen des Anspruchs 26.

Beschreibung des grundlegenden Systems und der zugrundeliegenden mathematischen Verfahren

Eine erste Übertragungsstrecke eines Messsystems wird zwischen einem ersten Sender H1 und einem Empfänger D1 gebildet. Der erste Sender H1 sendet ein erstes Signal in die erste Übertragungsstrecke hinein, so dass nach Durchgang durch mindestens einen Teils der ersten Übertragungsstrecke dieses Signal am Empfänger D1 detektiert wird. Ein zweiter Sender K, der ein sogenannter Kompensationssender ist, sendet ein zweites Signal in eine zweite Übertragungsstrecke, die zwischen dem zweiten Sender K und dem Empfänger D1 besteht. Das zweite Signal (Kompensationssendesignal) wird nach Durchgang der zweiten Übertragungsstrecke von dem Empfänger D1 detektiert. In dem Empfänger D1 überlagern sich das erste Signal und das zweite Signal im Wesentlichen linear. Bevorzugt ist die Überlagerung summierend. In dem Empfänger wird aus den beiden überlagerten Signalen ein Empfängerausgangssignal gebildet.

Zur Vermessung der Übertragungeigenschaften der ersten Übertragungsstrecke zwischen dem ersten Sender H1 und dem Empfänger D1 wird ein erstes Speisesignal S5 mittels eines Generators erzeugt. Das Speisesignal S5 und das Empfängerausgangssignal S1 sind derart ausgewählt, dass die beiden Signale je einen Vektor in einem Prä-Hilbert-Raum bilden. Die Definition des Prä-Hilbert-Raumes im hier gebrauchten Zusammenhang wird später genauer beschrieben. Die zugehörigen mathematischen Zusammenhänge sind beispielsweise in "Taschenbuch der Mathematik"; I. N. Bronstein , K. A. Semendjajew. G. Musiol , H. Mühlig; Ausgabe 6.; Frankfurt am Main; Verlag Harry Deutsch; 2005; Kapitel 12.4 "Hilbert-Räume", Seite 635 ff. beschrieben. An den Stellen wo auf dieses Buch Bezug genommen wird, ist dieses als BRONSTEIN bezeichnet.

Die auszusendenden Signale werden durch Funktionen der Zeit gebildet, z. B. im einfachsten Fall durch eine Sinus- oder Cosinusfunktion. Gleiches gilt für das Empfängerausgangssignal S1. Das bedeutet, dass die als Vektoren aufgefassten Signale (Speisesignal S5, mit dem der erste Sender gespeist wird, und Empfängerausgangssignal S1) Elemente eines Vektorraums sind, in dem ein inneres Produkt definiert ist. Mit anderen Worten sind die beiden Signale S5, S1 Elemente eines Vektorraums, in dem ein Skalarprodukt definiert ist, um die Beziehung zwischen den Vektoren beschreiben zu können. (BRONSTEIN Abschnitt 12.4.1.1)

Durch die Aussendung, den Durchgang durch die Übertragungsstrecke, Überlagerung mit dem Signal des Kompensationssenders K und den abschließenden Empfang wird das Speisesignal S5 zum Empfängerausgangssignal S1 modifiziert. Das Signal S1 enthält dann Anteile des Speisesignals S5 und Anteile, die aus Verzerrungen und sonstigen Modifikationen stammen. Zunächst sollen die Anteile, die dem Speisesignal S5 entsprechen, abgetrennt werden.

In einem weiteren Verfahrensschritt erfolgt daher die Durchführung einer Hilbert-Projektion des Empfängerausgangssignals des Empfängers S1 und des Speisesignals des ersten Senders S5. Die Hilbert-Projektion (BRONSTEIN Abschnitt 12.4.2) kann so erfolgen, dass das Empfängerausgangssignal auf das erste Speisesignal oder alternativ, dass das Speisesignal auf das Empfängerausgangssignal des Empfängers projiziert wird. Bei reellen Funktionen führen beide Ausführungen zu gleichen Ergebnissen. Bei komplexen Funktionen ist die Art der Projektion applikationsabhängig zu wählen. Hier sollte eine Systemsimulation durchgeführt werden. Durch die Hilbert-Projektion wird somit ein Projektionsbildsignal erzeugt.

Die Durchführung der Hilbert-Projektion bedeutet technisch, dass detektiert wird, wie groß der auf dem Speisesignal S5 basierende Signalanteil in dem Empfängerausgangssignal S1 ist. Neben dem Speisesignalanteil und dem Anteil aus dem zweiten Sender (Kompensationssender) K enthält das Empfängerausgangssignal beispielsweise Signalanteile von Störern (z. B. J1), die die Übertragungsstrecke beeinflussen. Da die Hilbert-Projektion nicht mit einem vollständigen, orthogonalen Basissignalsatz, sondern hier nur mit dem Speisesignal S5 durchgeführt wird, erhält man zunächst nur ein einzelnes Koeffizientensignal, das nur diesen Anteil beschreibt, und keinen vollständigen Koeffizientensignalsatz, der die Rekonstruktion des Empfängerausgangssignals S1 erlauben würde. Somit wird nur noch der Anteil des Empfängerausgangssignals S1 weiter verarbeitet, der mit dem Speisesignal S5 korreliert. Die nicht mit dem Speisesignal S5 korrelierenden Anteile des Empfängerausgangssignals S1 fallen also weg. Auf diese Weise findet eine Filterung statt, die nur das ausgesendete Speisesignal durchlässt.

Das durch die Hilbert-Projektion entstandene Projektionsbildsignal S10 wird zu einem Ausgangssignal S4 weiter verarbeitet. Bevorzugt erfolgt die Weiterverarbeitung durch Verstärkung des Projektionsbildsignals S10 mittels eines Verstärkers V1. Die Verstärkung kann gleich eins, aber beispielsweise je nach Anwendung auch negativ sein.

Das Ausgangssignal S4 wird zum einen weiterverarbeitet, um nach wenigstens einer teilweisen Rücktransformation des Ausgangssignals mit dem ersten Speisesignal S5 zu einem Vorsignal S6 zu werden. Aus dem Vorsignal S6 wird dann das Kompensationssignal S3 generiert, mit dem der zweite Sender, der der Kompensationssender K ist, gespeist wird. Hierdurch erfolgt eine rückgekoppelte Regelung des Empfängerausgangssignals S1. Das Kompensationssignal S3 kann mit dem Vorsignal S6 identisch sein. Verstärkung und Vorzeichen der Verstärkung des Verstärkers V1 werden typischerweise so gewählt, dass das rückgekoppelte System nicht schwingt und das Ausgangssignal S4 konvergiert.

Das Ausgangssignal S4 wird bevorzugt als Messergebnis aus dem System ausgekoppelt und extern weiterverarbeitet. Das Ausgangssignal S4 enthält insbesondere die Amplitudeninformation, die zur Kompensation von Veränderungen (z.B. Dämpfungen) in der Übertragungsstrecke benötigt wird.

Eigenschaften des Speisesignals

Zur Durchführung des erfindungsgemäßen Verfahrens kann im Gegensatz zum Stand der Technik das Speisesignal S5 nahezu jedes beliebige Signal sein. In der Regel ist das Speisesignal S5 im Gegensatz zum Stand der Technik, der ein monofrequentes Signal erfordert, ein multifrequentes Signal; es enthält folglich mehrere unterschiedliche Frequenzanteile und mehrere unterschiedliche Frequenzen gleichzeitig. Bevorzugt ist das Speisesignal ein bandbegrenztes Signal, das eine obere und untere Bandfrequenz aufweist. Wird als Speisesignal ein bandbegrenztes Signal verwendet, so hat es eine obere Grenzfrequenz $\omega_{max}$ und eine untere Grenzfrequenz $\omega_{min}$. Aus diesen ergibt sich die Bandbreite $\omega_{Band}$ des Speisesignals S5:

$$\omega_{Band} = \omega_{max} - \omega_{min}$$

Das Speisesignal ist bevorzugt derart gewählt, dass die untere Grenzfrequenz $\omega_{min}$ größer als die halbe Bandbreite $\omega_{Band}$ ist. Vorzugsweise ist es ein ungetaktetes, bandbegrenztes Signal.

In einer ebenfalls bevorzugten Ausführungsform kann das Speisesignal ein moduliertes Signal sein oder ein ungetaktetes Signal, wie beispielsweise ein Zufallssignal und/oder ein Pseudozufallssignal. Es ist auch möglich, ein auf einem Spreizcode basierendes Signal zu verarbeiten. Ebenfalls sind Rauschsignale als Speisesignal S5 geeignet, beispielsweise ein weißes, bandbegrenztes Rauschen.

In einer bevorzugten Ausführung des Verfahrens erfolgt die Hilbert-Projektion durch Bildung eines Skalarprodukts. Da sowohl das Speisesignal S5 als auch das Empfängerausgangssignal S1 Vektoren in einem Prä-Hilbert-Raum sind, ist ein Skalarprodukt zwischen ihnen definiert. Eine Skalarmultiplikation bzw. Skalarproduktbildung lässt sich technisch einfach durchführen: Bevorzugt erfolgt sie durch Multiplikation des Empfängerausgangssignals S1 mit dem Speisesignal, wodurch ein sogenanntes Detektionssignal S9 gebildet wird, und anschließende Filterung (typischerweise Integration).

Eigenschaften des Filters

Die anschließende Filterung des Detektionssignals S9 mit einem Filter F1, der bevorzugt ebenfalls bandbegrenzt ist, erzeugt ein gefiltertes Filterausgangssignal, das das Projektionsbildsignal S10 ist.

In einer bevorzugten Ausführungsform wird ein linearer Filter F1 verwendet, der bevorzugt nur solche Frequenzanteile durchlässt, deren Frequenzbetrag kleiner oder gleich der Hälfte des Abstands zwischen oberer Grenzfrequenz $\omega_{max}$ und unterer Grenzfrequenz $\omega_{min}$ des bandbegrenzten Speisesignals S5 ist.

Unterdrückung von Störern

Durch die Anwendung des erfindungsgemäßen Verfahrens mittels Kompensation durch Aussenden und Übertragen eines rückgekoppelten Kompensationssendesignals S3 an den Empfänger D1 kann das Verfahren auch dann angewendet werden, wenn Störer (z.B. J1) in der Übertragungsstrecke vorhanden sind. Häufig sind die Störer recht schmalbandig, was typischerweise für die künstlich erzeugten (man-made) Störer zutrifft. Im Vergleich dazu wird das Speisesignal S5 in der Regel breitbandig gewählt. Durch die Multiplikation wird der Anteil des Speisesignals S5 im Spektrum des resultieren Signals S9 relativ schmalbandig, während das Störsignal typischerweise gespreizt und in Frequenzen oberhalb der Filtergrenzfrequenz verlagert wird. Die Störsignalanteile werden bezogen auf eine Frequenz im Spektrum des Detektionssignals S9 in der Amplitude reduziert und bezogen auf ihren gesamten Anteil im Spektrum des Detektionssignals S9 gleichzeitig breitbandig. Der Filter F1 zur nachfolgenden Filterung ist so auf das festgelegte und bekannte Speisesignal S5 abgestimmt, dass gerade die auf dem Speisesignal S5 beruhenden Anteile des Empfängerausgangssignals den Filter passieren können. Alle anderen Signalanteile werden ausgefiltert oder in der Amplitude dem Zweck entsprechend ausreichend reduziert.

Durch dieses Spreizverfahren werden die Störer in den Rauschuntergrund gedrückt. Hierdurch ist das Verfahren insgesamt deutlich weniger sensibel gegenüber Störungen als die Verfahren im Stand der Technik. Insbesondere ist es in der Lage auch dann noch arbeitsfähig zu sein, wenn die Störpegel über den Signalpegeln des Speisesignals bzw. des von dem ersten Sender ausgesandten Sendesignals liegen. In Simulationen kann gezeigt werden, dass bei geeigneter Systemauslegung Störer, die nicht auf einem Vielfachen der im Speisesignal S5 verwendeten Frequenzen liegen, einen Störabstand von -12dB aufweisen dürfen. Dies liegt daran, dass das breite Spektrum des Speisesignals aufgrund von Redundanz auch dann einen guten Wiedererkennungswert des Signals S5 im Empfängerausgangssignal S1 gewährleistet, wenn Teile des Signals schon nicht mehr brauchbar sind. Das Verfahren ermöglicht eine sehr gute Entkopplung. Daher ist es im Gegensatz zum Stand der Technik auch möglich, zwei oder mehrere gleichzeitig arbeitende Systeme zu betreiben, die auf einer Kompensation beruhen, wenn deren Speisesignale S5 bezüglich der verwendeten Skalarprodukte zueinander orthogonal sind. Diese Systeme würden sich ohne die Durchführung des erfindungsgemäßen Verfahrens gegenseitig stören. Die Entkopplung mittels Speisesignal-Orthogonalität ermöglicht jedoch den störungsfreien Betrieb.

Optimale Wahl des Speisesignals

In einer bevorzugten Ausführungsform des erfindungsgemäßen Verfahrens erfolgt zunächst die Erkennung eines Störsignals in dem Empfängerausgangssignal. Dies tritt dann auf, wenn ein Störsender die Übertragungsstrecke zwischen dem ersten Sender und dem Empfänger beeinflusst. Um ein derartiges Störsignal zu erkennen, wird der Filter, der bevorzugt für die Hilbert-Projektion verwendet wird, vermessen.

Die Vermessung wird für das Beispiel der Bestimmung eines optimalen digitalen Spreiz-Codes als Basis des Speisesignals S5 erläutert. Dieser soll einen maximalen Störabstand zu in der Übertragungsstrecke vorhandenen Störern haben. Hierdurch wird sichergestellt, dass das Sendesignal S5 einen maximalen Störabstand zu dem Störsignal hat. Das Speisesignal S5 wird nun als quasi unendliche Folge eines oder mehrerer Codes aufgefasst. Im einfachsten Fall wird ein Code permanent wiederholt.

Jeder dieser gleichlangen Codes besteht aus einer Folge von n Bit, bei der das Speisesignal S5 beispielsweise auf einen physikalischen Pegel, der einer logischen 1 entspricht, oder auf einen physikalischen Pegel, der einer logischen 0 entspricht, geschaltet wird. Diese n Bitfolge wird beispielsweise in einer quasi nicht endenden Schleife wiederholend gesendet und erzeugt so das Basissignal S5. Bei einer Code Länge von n Bits sind so $2^n$ potenzielle Codes zur Erzeugung eines S5 Signals möglich. Mindestens einer dieser Codes hat einen maximalen Störabstand zu den potenziellen Störern.

Es wird nun der erste Sender H1 mit einem bekannten, insbesondere konstanten Speisesignal S5 gespeist. Bevorzugt ist das Speisesignal S5 gleich 1. Dies kann beispielsweise durch Absenden einer binären Codefolge erfolgen, die eine 1 symbolisiert. Ein dazu inverser Code symbolisiert eine Null.

Da das erfindungsgemäße Verfahren auf einem Signalschätzalgorithmus beruht, wird in der Startphase des Verfahrens der Sender mit einer logischen 1 beaufschlagt. Der Signalschätzer ordnet nun jedem empfangenen Code einen Code aus der Menge der $2^n$ potenziellen Codes zu. Damit steigt die Wahrscheinlichkeit, dass dieser Code im normalen Betrieb irrtümlich empfangen werden würde. Für jeden der möglichen $2^n$ Codes wird die Häufigkeit des Auftretens durch eine dem Empfänger nachgeschaltete Verarbeitungseinheit protokolliert. Diese dem Empfänger nachgeschaltete Verarbeitungseinheit mit einem Signalschätzer vermisst also die Umgebung und stellt auf die oben beschriebene Weise für jeden der möglichen Codes eine Empfangswahrscheinlichkeit fest und speichert diese in einer Störtabelle zwischen. Es werden nun beispielsweise die zwei inversen Codepaare aus der Störtabelle für die Erzeugung des Speisesignals S5 benutzt, die als Paar die geringste Häufigkeit und somit den maximalen Störabstand aufweisen.

Ein Element des so selektierten Code-Paars wird als Null-Code definiert, das andere als Eins-Code. Selbstverständlich sind auch mehrwertige Codes als der hier beschriebene binäre Code möglich.

Der Sender kann nun beispielsweise eine abwechselnde Folge von Null-Codes und Eins-Codes senden, jedoch auch eine Zufallsreihenfolge, die lediglich innerhalb eines bestimmten Zeitabschnitts mindestens eine Zustandsänderung aufweisen muss. Typischerweise wird die Code-Folge so gewählt, dass diese keinen Bias-Wert hat.

Natürlich kann ein Eins-Code im einfachsten Fall auch aus einem einzelnen 1-Bit bestehen und der korrespondierende Null-Code aus einem einzelnen 0-Bit. Die Code-Länge ist dann 1.

Der Sender H1 sendet nun die vorher festgelegte Codefolge des Signals S5. Der Kompensationssender (zweiter Sender) K sendet ein kompensierendes Signal, das typischerweise die inverse Codefolge ist. Hierbei strahlt der Kompensationssender K in der Regel direkt oder zumindest in bekannter Weise in den Empfänger ein, während das Sendesignal des ersten Senders H1 in der Übertragungsstrecke zum Empfänger D1 durch ein Messobjekt oder einen Störer beeinflusst ist. Diese Beeinflussung kann beispielsweise eine Reflektion, eine Änderung der Übertragungeigenschaften bzw. eine Änderung der Übertragungsstrecke sein, z. B. die Änderung der Dielektrizitätskonstante oder der Permeabilitätszahl oder allgemeiner des Brechungsindex. Auch die zweite Übertragungsstrecke zwischen dem Kompensationssender und dem Empfänger kann beeinflusst werden. Hierbei ist es lediglich wichtig, dass eine andere Beeinflussung stattfindet als in der ersten Übertragungsstrecke. Die Beeinflussung der zweiten Übertragungsstrecke sollte bekannt sein. Im Idealfall wird die zweite Übertragungsstrecke nicht durch das Messobjekt oder einen Störer beeinflusst.

Der Signalschätzer in der Verarbeitungseinheit führt eine Korrelation mit den Codes durch und bestimmt den wahrscheinlichsten Code und die Wahrscheinlichkeit, mit der der gesendete Code tatsächlich detektiert wurde. Die tatsächlich detektierten Codes werden als gestörte Codes gewertet, wenn sie nicht mit dem gesendeten Code übereinstimmen und die Hamming-Distanz einen Mindestwert (z. B. 1) überschreitet. Hiermit wird die zuvor abgespeicherte Störtabelle an den aktuellen Stand angepasst. Beim nächsten Sendevorgang wird so durch den Generator ein Codepaar mit der geringsten Störwahrscheinlichkeit gewählt. Dieses Verfahren stellt auch sicher, dass beispielsweise zwei parallel arbeitende Systeme, die das erfindungsgemäße Verfahren nutzen, so eingestellt werden können, dass sich die Systeme nicht beeinflussen und deshalb ihre Codes möglichst orthogonal zueinander sind.

Der Regelalgorithmus des erfindungsgemäßen Verfahrens arbeitet so, dass die Sendeleistung des Kompensationssenders K derart geregelt wird, dass die Wahrscheinlichkeit der Detektion des gesendeten Codes bzw. des invertierten gesendeten Codes durch den Empfänger minimiert wird. Wird der invertierte Code detektiert, so ist der Kompensationssender zu stark eingestellt. Wird lediglich der gesendete Code detektiert, so ist der Kompensationssender K zu schwach eingestellt. Die Stärke, mit der der Kompensationssender K eingestellt wird, ist der Messwert der Übertragungsstrecke.

Da durch geeignete Wahl der Sendesignale S5, beispielsweise wie hier beschrieben in Form von Codes, zwei Sensorsysteme, die nach dem erfindungsgemäßen Verfahren arbeiten, parallel betrieben werden können, ist es auch möglich, mehrere Sender und mehrere Empfänger gleichzeitig arbeiten zu lassen. Beispielsweise ist es möglich, Systeme aufzubauen, die zwei Sender und einen Empfänger umfassen oder Systeme, die zwei Empfänger und einen Sender aufweisen. Da die Sendeseite des Systems jedoch einfacher und kostengünstiger zu realisieren ist, ist es sinnvoll, nur einen Empfänger zu verwenden.

Durch die Verwendung mehrerer Sender und/oder Empfänger ist beispielsweise auch eine dreidimensionale Triangulation möglich. Dabei werden drei Sendesysteme (bestehend aus jeweils (Code-)Generator und Sender) eingesetzt, um auch eine dreidimensionale Erfassung zu ermöglichen.

Beschreibung des Triangulationsproblems

Um beispielsweise ein oder mehrere Objekte in der Übertragungstrecke detektieren zu können, und zwar nicht nur deren Anwesenheit, sondern auch Position oder Bewegung, ist der Einsatz eines zweidimensionalen (insbesondere asynchronen) Schätzers geeignet, der eine Bestimmung der Amplitude und der Verzögerung vornimmt. Dies kann beispielsweise durch einen Korrelator erfolgen. Die Korrelationsfunktion zwischen einem multifrequenten Sendesignal, beispielsweise einer beliebigen multifrequenten Codefolge, und einem empfangenen Signal, beispielsweise einer ebenfalls multifrequenten Codefolge, wird zur Berechnung eines zweiten (codierten) Signals (Kompensationssignal) verwendet. Bei Codesequenzen wird hierzu die Sequenz des ersten Generators invertiert und mit der verstärkten Korrelationsfunktion des Empfängers multipliziert. Die so erhaltene Codefolge führt bei Sendung durch den Kompensationssender K zu einer Auslöschung der Summe der reflektierten Signale am Empfänger D1, wenn durch Laufzeiteffekte keine Verzögerung im Übertragungskanal des Signals des ersten Senders eintritt. Das verstärkte Korrelationssignal ist der Messwert, der beispielsweise die Reflektivität eines Objektes im Übertragungskanal des ersten Senders wiedergibt.

Eine Verzögerung im Übertragungskanal führt zu einem verzögerten Signal, das Code-Anteile enthält, die einem um typischerweise ein Bit verschobenen Code entsprechen. Beispielsweise enthält das verzögerte Signal der Code-BitFolge 010110 dann Anteile des Codes 001011. Ein solcher Code wird im Folgenden verzögerter Code genannt.

Der Regelalgorithmus des erfindungsgemäßen Verfahrens zur Bestimmung des Abstands zusätzlich zur Bestimmung der Reflektivität arbeitet so, dass die Sendeleistung des Kompensationssenders K derart geregelt wird, dass auch die Wahrscheinlichkeit der Detektion des verzögerten Codes bzw. des invertierten gesendeten Codes durch den Empfänger minimiert wird. Wird der invertierte Code des verzögerten Codes detektiert, so ist der Kompensationssender für diesen verzögerten Code zu stark eingestellt. Wird lediglich der verzögerte Code detektiert, so ist der Kompensationssender K für diesen Code zu schwach eingestellt.

Um den Anteil des verzögerten Codes im Empfängersignal feststellen zu können, wird ein verzögertes Speisesignal mit dem Ausgangssignal des Empfängers korreliert. Ein verzögertes Speisesignal ist ein auf dem verzögerten Code basierendes Speisesignal. Das so erhaltene Korrelationssignal wird verstärkt und mit dem inversen Code des verzögerten Codes multipliziert. Die so erhaltene zusätzliche Codefolge führt bei Sendung zusammen mit der zuvor bestimmten Codefolge für den nicht verzögerten Code durch den Kompensationssender K zu einer Auslöschung der Summe der reflektierten Signale am Empfänger.

Die Stärke, mit der der Kompensationssender K für diese Codefolge eingestellt wird, ist der Messwert der Verzögerung in der Übertragungsstrecke.

Hierbei taucht das Problem auf, dass der verzögerte Code bei dem jeweils angewandten Korrelationsverfahren nicht mit dem nicht verzögerten Code korrelieren darf. Ist das Korrelationsverfahren die Bildung eines Skalarprodukts, so bedeutet dies, dass Code und verzögerter Code zueinander orthogonal sein müssen, damit die beiden Messwerte voneinander unabhängig sind. Falls dies nicht der Fall ist, und das Maß der Korrelation der Codes untereinander bekannt ist, kann jedoch durch eine einfache Matrix-Multiplikation eine Orthogonalität wieder hergestellt werden. In den folgenden Abschnitten wird daher auch eine Methode beschrieben, die unabhängig von dem verwendeten Code eine Verzögerungsmessung zulässt.

Die auf diese Weise bestimmten Korrelationsfunktionen geben somit die Position der Objekte wieder. Somit ist mit nur einem Sendesystem bestehend aus Sender, Kompensationssender und Empfänger die sofortige und somit gleichzeitige Detektion eines Objekts bzw. dessen Position (als Abstand) in der Übertragungsstrecke möglich.

Unterschiede zum Stand der Technik im Bezug auf die Laufzeitmessung

Das erfindungsgemäße Verfahren unterscheidet sich damit von den bekannten Detektionsverfahren mit Kompensation, da diese stets monofrequente, getaktete Signale voraussetzen, die ein Tastverhältnis von 50 % aufweisen und damit störempfindlich und nicht ohne weiteres triangulationsfähig sind.

Die im Stand der Technik bekannten Systeme zur Messung der Laufzeit verlangen einen Phasenschieber, der ebenfalls nur bei diesen monofrequenten Signalen eingesetzt werden kann. Derartige bekannte Systeme sind jedoch gerade nicht für mehrere Signale mit mehreren Frequenzen oder für Signale mit unterschiedlichen Tastverhältnissen geeignet, da der Phasenschieber zu einer Verzerrung der multifrequenten Signale führt und eine Verzögerung der Signale nur bei monofrequenten Signalen mit einem einzigen konkreten Phasenverschiebungswinkel identisch ist. Genau diese Verzögerung soll aber kompensiert werden, was für Vorrichtungen gemäß dem Stand der Technik nicht möglich ist. Das erfindungsgemäße Verfahren überwindet diese Nachteile jedoch und erlaubt den Einsatz von multifrequenten Signalen und damit die Übertragung redundanter Information, was die Störempfindlichkeit signifikant senkt.

Messung der Laufzeit durch Auswertung der Signalflanken

Neben der Messung mit Codes kann auch basierend auf Signalflanken eine Objektdetektion vorgenommen werden. Dies wird im Folgenden an einem Beispiel erläutert:

Um mit dem erfindungsgemäßen Verfahren ein in der Übertragungsstrecke positioniertes Objekt zu detektieren, das die Übertragungeigenschaften der Übertragungsstrecke beeinflusst, ist eine Amplitudenmessung nicht ausreichend, insbesondere wenn der Abstand zwischen dem reflektierenden Objekt und dem Sender ermittelt werden soll. Dies beruht auf der Tatsache, dass der Reflexionskoeffizient des Objekts in der Regel unbekannt ist. Es gilt daher, wie zuvor die Verzögerung, zu bestimmen, die von dem Objekt verursacht wird. Aus diesem Grund wird neben dem Speisesignal für den ersten Sender ein zusätzliches, um einen vorbestimmten Zeitraum $\Delta t$ verzögertes Signal gebildet. Das verzögerte Signal würde, wie oben bereits beschrieben, ausreichen, um die Verzögerung des vom Objekt zurückgeworfenen Signals zu detektieren und damit Rückschlüsse auf die Position und/oder Bewegung eines Objektes erhalten zu können.

Im Rahmen der Erfindung wurde, wie bereits angedeutet, erkannt, dass die Verarbeitung eines derartigen, verzögerten Signals technisch schwierig ist, da dieses Signal nicht notwendigerweise orthogonal zu dem Speisesignal ist. Entscheidend bei der Anwendung des erfindungsgemäßen Verfahrens ist die Bestimmung des Filters F1, mit dem die Hilbert-Projektion technisch realisiert wird. Es kann gezeigt werden, dass für eine ideale Übertragungsstrecke zwischen dem Sender H1 und Empfänger D1 bei einem bandbegrenzten Speisesignal S5 und einem linearen Filter F1 das Signal mit der Amplitudeninformation proportional zur Dämpfung der Übertragungsstrecke ist. Dies gilt insbesondere dann, wenn in dem Regelkreis nach dem Filter F1 zusätzlich ein Verstärker V1 eingesetzt wird, da in praxi der Verstärker große Verstärkungsfaktoren aufweist, um einen hinreichenden kleinen Regelfehler zu erhalten und somit durch eine große Rückkopplung Nichtlinearitäten und parasitäre Einflüsse des Übertragungssystems zu unterdrücken.

Es kann gezeigt werden, dass die Funktion des Filters F1 beim Vorhandensein eines Störers J1 in dem Übertragungskanal nur dann rein proportional zur Dämpfung der Übertragungsstrecke ist, wenn der Störer J1 keine Anteile aufweist, die synchron zu dem Speisesignal S5 des ersten Senders H1 sind. Der Anteil des Störers J1, der synchron zu dem Speisesignal des ersten Senders S5 ist, ist von dem Speisesignal S5 selbst nicht mehr zu unterscheiden. Das Messsignal S4 (Empfangssignal des Empfängers bzw. dessen Ausgangssignal) wird damit verfälscht. Aus diesem Grund ist es wichtig, dass das Speisesignal des Senders S5 und die Filterfunktion des Filters F1 derart gewählt werden, dass das Filterausgangssignal S10 für das mit dem Störsignal multiplizierte Speisesignal S5 minimal wird. Dies entspricht einer Orthogonalitätsforderung zwischen dem Störsignal und dem Speisesignal. Dies lässt sich insbesondere dann erreichen, wenn die Eigenschaften des Störers und somit des Signalanteils des Störers im Empfängerausgangssignal S1 bekannt sind, beispielsweise weil der verursachende Prozess des Störsignals bekannt ist, wie etwa bei einem thermischen Rauschen.

Ähnlich, wie zuvor für die Versendung von Codes beschrieben, kann das System optimiert werden. Hierzu wird das Speisesignal S5 nur für diese Bestimmung gleich 1 gesetzt und das System vermessen. Das System empfängt nun eine durch den Störer vorgegebene Sequenz. Existieren mehrere Templates von Speisesignalen, die für die Aussendung als Speisesignal zur Auswahl stehen, so wird für das nächste Aussenden mittels des ersten Senders das Template ausgewählt, dessen Filterfunktion F1 nach Multiplikation des Speisesignals mit der Störsequenz unter allen möglichen Templates minimal ist.

Wie bereits erwähnt, wurde im Rahmen der Erfindung erkannt, dass die Verwendung eines gegenüber dem Speisesignal S5 verzögerten Signals S5d in der Verarbeitung technisch schwierig ist, wenn das verzögerte Signal S5d nicht orthogonal zu dem Speisesignal S5 ist. Im Falle der Codes wurde dies durch die Forderung sichergestellt, dass der verzögerte Code orthogonal zum nicht verzögerten Code sein sollte. Die Filterfunktion ist bei Nichtvorliegen der Orthogonalität nicht mehr proportional zur Dämpfung der Übertragungsstrecke. Aus diesem Grund wird in einer bevorzugten Ausführungsform des erfindungsgemäßen Verfahrens ähnlich wie zuvor bereits bei der Verwendung von Codes angedeutet, ein orthogonales Basissignal S5o gebildet, das orthogonal zu dem Speisesignal des Generators S5 ist, mit dem der erste Sender gespeist wird. Dieses orthogonale Signal S5o wird verwendet, um z. B. die Lage eines Objekts im Raum zu bestimmen.

Beispielsweise kann ein orthogonales Speisesignal S5o aus der Differenz eines gegenüber dem Speisesignal S5 vorlaufenden Signals S5v und eines nachlaufenden Signals S5d erzeugt werden. Das vorlaufende Signal S5v läuft um einen Zeitraum $\Delta t$ gegenüber dem Speisesignal S5 vor, während das nachlaufende Signal S5d um diesen Zeitraum $\Delta t$ verzögert ist. Hierbei wird vorausgesetzt, dass der Mittelwert des Signals S5 gleich Null ist.

Alternativ wird das orthogonale Speisesignal S5o aus der Differenz des Speisesignals S5 und eines um den Zeitraum $\Delta t$ nachlaufenden Signals S5d gebildet. In dem Fall darf für die Hilbert-Projektion zur Amplitudenregelung jedoch nicht mehr das Speisesignal S5, sondern nur noch das Differenzsignal S5-S5o verwendet werden.

Bevorzugt wird dieses orthogonale Speisesignal S5o in dem Verfahren verwendet, wobei nach Erzeugung des orthogonalen Signals S5o das Skalarprodukt zwischen S5o und dem Empfängerausgangssignal S1 gebildet wird, so dass ein orthogonales Projektionsbildsignal S10o erzeugt wird. Dieses wird zusätzlich zu dem Projektionsbildsignal S10 gebildet, das auf dem Speisesignal S5 bzw. auf der Differenz zwischen Speisesignal S5 und orthogonalem Speisesignal S5o beruht. In einem weiteren Schritt erfolgt ein optionales Verstärken des orthogonalen Projektionsbildsignals S10o mittels eines Verstärkers zum Signal S4o. Das so gebildete Ausgangssignal S4o wird in einem weiteren Schritt rückprojiziert, wobei es mit dem orthogonalen Speisesignal S5o multipliziert wird. Das so entstandene orthogonale Vorsignal S6o wird zu dem Vorsignal S6, das durch Multiplikation des Speisesignals S5 mit dem Ausgangssignal S4 bzw. durch Multiplikation des Differenzsignals S5-S5o mit dem Ausgangssignal S4 gebildet wurde, addiert. Durch Addition des Vorsignals S6, des orthogonalen Vorsignals S6o und gegebenenfalls eines optionalen Bias-Wertes B1 wird das Kompensationssignal S3 erzeugt, mit dem der Kompensationssender K gespeist wird.

Bevorzugt erfolgt auch bei der Bildung des Skalarprodukts zwischen dem Empfängerausgangssignal S1 und dem orthogonalen Speisesignal S5o eine Multiplikation der beiden Signale und eine anschließende Filterung, die mittels eines zweiten Filters F2 durchgeführt wird. Dieser Filter ist von dem ersten Filter F1, mit dem das auf dem Speisesignal beruhende Projektionsbildsignal gefiltert wird, verschieden. Typischerweise weist er aber die gleichen Parameter auf.

Befindet sich nun ein Objekt in der Übertragungstrecke, so erzeugt die Reflektion des Sendesignals durch das Objekt einen Anteil im Signal S1, der mit S5o korreliert. Die Korrelation ist stärker und somit der Pegel des Signals S4o höher, wenn sich das Objekt näher an dem Empfänger-Sender-Paar befindet und geringer, wenn es sich weiter weg befindet.

Ortsauflösung mehrerer Objekte mit Hilfe einer verschiebbaren Zone

Es besteht teilweise die Anforderung, mehrere Objekte getrennt voneinander detektieren zu können. Um die Auflösung mehrerer Objekte und deren Detektion im Raum zu ermöglichen, wird nicht nur ein orthogonales Signal verwendet, sondern bevorzugt mehrere orthogonale Signale, beispielsweise zwei. Diese sind beispielsweise so gestaltet, dass sie aufgrund aufeinanderfolgender zeitlicher Bereiche, aufeinander folgenden räumlichen Bereichen, in denen sich ein Objekt befinden kann, entsprechen. Drei derartige orthogonale Basissignale S5o1, S5o2 und S5o3 können beispielsweise aus drei dem Speisesignal S5 nachlaufenden Signalen, also verzögerten Signalen S5d1, S5d2, S5d3 gebildet werden. Insbesondere werden die aus diesen Signalen gebildeten orthogonalen Basissignale S5o1, S5o2, S5o3 typischerweise als einer S5-Flanke nachlaufende Impulse generiert. Hierbei können die Verzögerungszeiträume der einzelnen Signale unterschiedlich sein. Die Signale sind zweckmäßigerweise aber nicht zwingend auch untereinander orthogonal.

Bevorzugt werden hierzu aus dem Speisesignal S5 ein um einen ersten Zeitraum Δt1 gegenüber diesem verzögertes Signal S5d1, ein um einen zweiten Zeitraum Δt2 verzögertes Signal S5d2 und ein um einen dritten Zeitraum Δt3 verzögertes Signal S5o3 gebildet. Der zweite Verzögerungszeitraum Δt2 ist größer als der erste Zeitraum Δt1. Der dritte Zeitraum Δt3 ist größer oder gleich dem zweiten Zeitraum Δt2. In einem weiteren Schritt wird aus dem Speisesignal S5 und dem Signal S5d1 ein erstes Basissignal S5o1 beispielsweise durch Bildung der Differenz der beiden Signale S5 und S5d1 gebildet. Zu diesem Basissignal S5o1 wird ein zweites, zu diesem orthogonales Basissignal S5o2 erzeugt, wobei das orthogonale Basissignal S5o2 bevorzugt aus der Differenz des ersten verzögerten Signals S5d1 minus des zweiten verzögerten Signals S5d2 gebildet wird. Zu den Basissignalen S5o1 und So2 wird ein drittes, zu diesen orthogonales Basissignal S5o3 erzeugt, wobei das orthogonale Basissignal S5o3 bevorzugt aus der Differenz des zweiten verzögerten Signals S5d3 minus des dritten verzögerten Signals S5d3 gebildet wird. Das dritte orthogonale Basissignal S5o3 kann, wenn Δt3 gleich dem zweiten Zeitraum Δt2 ist, verschwinden. Der erste Verzögerungszeitraum Δt1 kann auch Null sein. Aus dem ersten Speisesignal S5, und den dazu orthogonalen drei nachlaufenden Signalen S5d1, S5d2 und S5d3 werden somit durch Anwendung der oben beschriebenen Verfahrensschritte jeweils die drei orthogonalen Basissignale S5o1, S5o2 und S5o3 gebildet. Diese sind jedoch nicht orthogonal zum Speisesignal S5. Daher wird ein orthogonales Signal S5o durch Subtraktion der Signale S5o1, S5o2 und S5o3 vom Signal S5 erzeugt. Aus den drei orthogonalen Basissignalen S5o1, S5o2 und S5o5 und dem orthogonalen Basissignal S5o, das auf dem Speisesignal S5 des ersten Senders beruht, wird, wie gewohnt, durch vier Hilbert-Projektionen des Empfängerausgangssignals S1 auf eines der vier Signale S5o, S5o1, S5o2 und S5o3 und anschließender Verstärkung und teilweiser Rücktransformation das Kompensationssignal S3 zur Speisung des Kompensationssenders K gebildet. Bevorzugt erfolgt dies durch Addition der entsprechenden Vorsignale S6o, S6o1, S6o2 und S6o3. Auf diese Weise werden die Verzögerungen dem Kompensationssender zugeführt.

Wird die Differenz $\Delta t_2 - \Delta t_1$ und der Zeitraum $\Delta t_3$ konstant gehalten, so kann durch Variation von $\Delta t_1$ der Puls, den das Signal S5o2 darstellt, verschoben werden. Damit wird beispielsweise auch der räumliche Punkt der detektierbaren Reflektionen bei Time-of-Flight Systemen verschoben.

Ortsauflösung mehrerer Objekte mit Hilfe mehrerer Zonen

Selbstverständlich ist es auch möglich, nicht nur drei orthogonale Signale zur Anwendung des Verfahrens zu erzeugen, sondern eine Vielzahl von n. Die Weiterverarbeitung dieser orthogonalen Signale S5o1, S5o2, ...S5on erfolgt entsprechend, so dass mehrere orthogonale Vorsignale S6o1, S6o2, ...S6on gebildet werden, aus denen das Kompensationssignal S3 zur Speisung des Kompensationssenders K gebildet wird. Zur Erzeugung der Vorsignale S6o1, S6o2, ....S6on können bevorzugt auch mehrere Verstärker verwendet werden.

Besonders bevorzugt sind bei der Verwendung mehrerer orthogonaler Signale mindestens zwei dieser Signale S5o1, S5o2, ... S5on zueinander orthogonal und nicht nur orthogonal zu dem Speisesignal S5 des ersten Senders.

Kompensation einer Verzögerung durch Verzögerung des Kompensationssignals

In einer bevorzugten Ausführung des erfindungsgemäßen Verfahrens erfolgt wenigstens eine Verzögerung des weiterverarbeiteten Signals, das auf dem Empfängerausgangssignal S1 beruht, innerhalb der rückkoppelnden Regelungsschleife. Es wird zu dem Speisesignal S5 ein orthogonales Basissignal S5o erzeugt, aus dem nach Hilbert-Projektion mit dem Empfängerausgangssignal S1 ein orthogonales Ausgangssignal S4o gebildet wird, insbesondere mittels eines zweiten Verstärkers. Das weiterzuverarbeitende Empfängerausgangssignal S1 wird in Abhängigkeit des orthogonalen Ausgangssignals S4o des orthogonalen Basissignals S5o in der Weiterverarbeitung zu dem Kompensationssignal S3 zur Speisung des Kompensationssenders K verzögert. Die Verzögerung kann an mehreren Stellen einzeln oder in Kombination im Regelkreis erfolgen. Eine erste Möglichkeit der Verzögerung besteht darin, das Speisesignal S5 unmittelbar vor der Hilbert-Projektion des Speisesignals S5 mit dem Empfängerausgangssignal S1 zu verzögern. Eine Verzögerung kann auch während der Rücktransformation erfolgen, wobei das Vorsignal, aus dem das Kompensationssignal gebildet wird, verzögert wird. Nach Verzögerung der jeweiligen Signale erfolgt eine Weiterverarbeitung der verzögerten Signale anstatt der sonst nicht verzögerten Signale. Auf diese Weise ist es möglich, an mehreren Stellen der Regelschleife ein Verzögerungsglied einzufügen, um eine bessere Ortsauflösung bei der Detektion eines Objektes in der Übertragungsstrecke zu erzeugen.

Behandlung von Nahfeldeffekten

Im Rahmen der Erfindung wurde erkannt, dass bei der Detektion von Objekten, die nahe dem Empfänger positioniert sind, das Verfahren oft in einem ungünstigen Arbeitspunkt arbeitet. Ursächlich ist, dass die Systemkomponenten in der Regel nur um gewisse Arbeitspunkte herum linear arbeiten. Das ganze Verfahren setzt aber genau diese Linearität voraus. Wird das System also mit irgendeiner Komponente in einen extremen Arbeitspunkt gebracht, so führt dies zu Nichtlinearitäten und damit zu Verfälschungen. Genau dies ist bei sehr kleinen Verzögerungen der Fall.

Es wurde erkannt, dass dieses Problem für den Fall einer nur sehr kleinen Verzögerung umgangen werden kann, wenn unmittelbar vor dem ersten Sender ein definiertes Verzögerungsglied eingebaut wird. Dieses simuliert für das System einen größeren Abstand und bringt es dadurch in einen besseren Arbeitspunkt. Bevorzugt kann dieses Verzögerungsglied geregelt sein. In einer bevorzugten Ausführungsform werden der erste Sender oder bei Anwendung eines Systems mit mehreren ersten Sendern, diese ersten Sender nicht direkt durch das Speisesignal S5 angesteuert. In wenigstens einer Betriebslage bzw. einem Betriebszustand wird der bzw. die ersten Sender H1 durch ein zeitlich verzögertes Signal S5d' angesteuert.

Bevorzugt wird gemäß dem Verfahren zunächst ein zu dem Speisesignal S5 orthogonales Basissignal S5o erzeugt. Anschließend erfolgt sowohl eine Hilbert-Projektion des Empfängerausgangssignals S1 mit dem Speisesignal S5 wie auch mit dem orthogonalen Basissignal S5o. Gegebenenfalls wird das orthogonale Projektionsbildsignal S10o verstärkt und zu einem orthogonalen Ausgangssignal S4o weiterverarbeitet. Die Verzögerung des ursprünglichen Speisesignals S5 erfolgt bevorzugt in Abhängigkeit von dem orthogonalen Ausgangssignal S4o, das die durch ein Objekt in der Übertragungsstrecke hervorgerufene Laufzeitverzögerung repräsentiert. Das verzögerte Speisesignal S5d' dient dann zum Speisen des ersten Senders (H1) bzw. der ersten Sender.

Im Rahmen der Erfindung wurde erkannt, dass dieses Prinzip eines verzögerten Ausgangssignals auch dann angewendet werden kann, wenn das eigentliche Speisesignal getaktet und/oder monofrequent ist. Die Verzögerung des Speisesignals und Bildung des verzögerten Speisesignals kann dann auch mittels einer Phasenverschiebung erfolgen, da dann keine Verzerrung der Signale auftritt. Eine Phasenverschiebung ist nur in diesem Fall möglich, nicht jedoch bei Anwendung von multifrequenten Speisesignalen, da dann die Signale verzerrt würden.

Da das erfindungsgemäße Verfahren zunächst gründsätzlich mit einem beliebigen Speisesignal S5 zur Speisung des Senders erfolgen kann, ist dessen Generierung relativ einfach. Je nach Anwendungsfall können zur Erzeugung des Speisesignals S5 beispielsweise Codemultiplexverfahren (Code Division Multiple Access, CDMA) verwendet werden. Hierbei können sowohl synchrone als auch asynchrone CDMA-Verfahren genutzt werden. Dies basiert auf der Erkenntnis, dass breitbandige Speisesignale bzw. breitbandige Sendesignale weniger leicht zu stören sind als schmalbandige Signale. Es können folglich im Gegensatz zum Stand der Technik auch sogenannte Spread-Spektrum-Verfahren zur Generierung eines Spreizcodes verwendet werden. Das Speisesignal S5 für den ersten Sender H1 kann beispielsweise auch mittels eines Zufallsgenerators oder eines Quasizufallsgenerators erzeugt werden. Bei einem asynchronen CDMA-Code kann der Quasizufallsgenerator beispielsweise als rückgekoppeltes Schieberegister ausgebildet sein. Die Rückkopplung kann bevorzugt durch ein einfach primitives Polynom (Generatorpolynom) erfolgen. Für alle diese Verfahren zur Erzeugung des Speisesignals S5 ist es wichtig, dass die Bedingungen einer Bandbegrenzung etc., wie zuvor erläutert, erhalten bleiben.

Wichtig bei der Erzeugung des einfach primitiven Generatorpolynoms ist daher unter anderem, dass der Ausgangspegel bipolar ist, also im Mittel keinen Bias-Anteil enthält. Nur dann kann das Filter so eingestellt werden, dass die Anwendung der Filterfunktion auf das Speisesignal selbst Null ergibt. Durch eine dermaßen sichergestellte Erzeugung einer Quasizufallsfolge als primitives Generatorpolynom kann die Bedingung erfüllt werden, dass die Filterung des mit dem Störsignal multiplizierten Speisesignals zu einem Minimum führt. Ein wichtiger Umstand ist, dass einfach Primitive Polynome nicht durch alle $2^n$ Zustände eines rückgekoppelten n-Bit-Schieberegisters laufen sondern nur durch $2^n-1$. Der eine nicht durchlaufene Zustand muss, um eine 50% Wahrscheinlichkeit für eine 1 oder 0 herzustellen (Bias-Wert=0), durch eine Zusatzlogik eingebunden werden. Geeignete primitive Generatorpolynome, die bei der Rückkopplung zu einer Quasizufallsfolge führen, sind in nachfolgender Tabelle angegeben. Diese Tabelle ist nur beispielhaft und nicht abschließend.

Tabelle 1: Angewählte primitive Generatorpolynome

| | |
|---|---|
| $1+x$ | $1+x+x^2$ |
| $1+x+x^3$ | $1+x+x^4$ |
| $1+x^2+x^5$ | $1+x+x^6$ |
| $1+x^3+x^7$ | $1+x+x^2+x^7+x^8$ |
| $1+x^4+x^9$ | $1+x^3+x^{10}$ |
| $1+x^2+x^{11}$ | $1+x+x^5+x^8+x^{12}$ |
| $1+X+x^2+x^{12}+x^{13}$ | $1+x^2+x^3+x^{13}+x^{14}$ |
| $1+x+x^{15}$ | $1+x+x^7+x^{10}+x^{16}$ |
| $1+X^3+X^{17}$ | $1+x^7+x^{18}$ |

(fortgesetzt)

| | |
|---|---|
| $1+x+x^4+x^{16}+x^{19}$ | $1+x^3+x^{20}$ |
| $1+x^2+x^{21}$ | $1+x+x^{22}$ |
| $1+x^5+x^{23}$ | $1+x^{20}+x^{21}+x^{23}+x^{24}$ |
| $1+x^3+x^{25}$ | $1+x+x^2+x^6+x^{26}$ |
| $1+x+x^2+x^5+x^{27}$ | $1+x^3+x^{28}$ |
| $1+x^2+x^{29}$ | $1+x+x^2+x^{23}+x^{30}$ |
| $1+x^3+x^{31}$ | $1+x+x^2+x^{22}+x^{32}$ |
| $1+x^{13}+x^{33}$ | $1+x+x^2+x^{27}+x^{34}$ |
| $1+x^2+x^{35}$ | $1+x+x^2+x^4+x^5+x^6+x^{36}$ |
| $1+x+x^2+x^3+x^4+x^5+x^{37}$ | $1+x+x^5+x^6+x^{38}$ |
| $1+x^3+x^{41}$ | $1+x+x^2+x^3+xy+x^5+x^{42}$ |
| $1+x^3+x^4+x^6+x^{43}$ | $1+x^2+xy+x^6+x^{44}$ |
| $1+x+x^3+x^4+x^{45}$ | $1+x+x^2+x^3+x^5+X^8+x^{46}$ |
| $1+x^4+x^5+x^6+x^{49}$ | $1+x^2+x^3+x^4+x^{50}$ |
| $1+x+x^3+x^6+x^{51}$ | $1+x+x^3+x^{52}$ |
| $1+x+x^2+x^6+x^{53}$ | $1+x^2+x^3+x^4+x^5+x^6+x^{54}$ |

Wie bereits oben schon erwähnt, wird das erfindungsgemäße Verfahren nicht nur bevorzugt mittels eines Analogrechners sondern bevorzugt teilweise digitalisiert durchgeführt. Bevorzugt laufen wenigstens Teile des Verfahrens in digitaler Form auf einem Mikrorechner oder einem Signalprozessor ab. Die Digitalisierung kann auch unter Zuhilfenahme einer Finite-State-Machine (FSM) oder in einem sogenannten Hidden-Markov-Model (HMM) oder mittels eines sogenannten Petri-Netzes oder mittels eines Neuronalen Netzes (NN) erfolgen.

Betrachtung verschiedener physikalischer Größen

Bevorzugt kann das erfindungsgemäße Verfahren mit einem Sensorsystem ausgeführt werden, das einen ersten Sender, einen Kompensationssender als zweiten Sender und einen Empfänger umfasst. Ein derartiges System ist geeignet, um die Übertragungseigenschaften einer Übertragungsstrecke zwischen dem ersten Sender und dem Empfänger zu vermessen. Das Sensorsystem ist dabei auf ein auf einer rückgekoppelten Kompensation beruhendes Messsystem. Der erste Sender wird mit einem Speisesignal, das bevorzugt mittels eines Generators erzeugt wird, gespeist und sendet ein erstes Sendesignal in die Übertragungsstrecke zu dem Empfänger. Der Kompensationssender sendet ein zweites Signal durch eine zweite Übertragungsstrecke ebenfalls zu dem Empfänger, wobei bevorzugt die zweite Übertragungsstrecke unbeeinflusst ist. Am Empfänger werden die empfangenen Signale linear überlagert. Bevorzugt erfolgt die Überlagerung durch Addition der Empfangssignale. Das Speisesignal für den ersten Sender ist derart ausgebildet, dass das Empfängerausgangssignal und das Speisesignal einen Vektorraum im Prä-Hilbert-Raum bilden.

Eine Verarbeitungseinheit des Sensorsystems ist in der Lage eine Hilbert-Projektion von Empfängerausgangssignal und Speisesignal durchzuführen und ein Projektionsbildsignal zu bilden. In einem ersten Verstärker wird dieses Projektionsbildsignal zu einem Ausgangssignal durch Verstärkung weiterverarbeitet.

Die Verarbeitungseinheit ist darüber hinaus dazu ausgebildet und eingerichtet eine Rücktransformation des Ausgangssignals mit dem Speisesignal durchzuführen und hieraus ein Vorsignal zu bilden, welches durch Weiterverarbeitung zu einem Kompensationssignal wird. Das Kompensationssignal dient zur rückkoppelnden Regelung des Empfängerausgangssignals und wird in den Kompensationssender eingespeist, der daraus ein Kompensationssendesignal erzeugt, was an den Empfänger übertragen wird. Bevorzugt erfolgt in der Verarbeitungseinheit die Rücktransformation durch Multiplikation und gegebenenfalls zusätzlicher Addition der entsprechenden Signale.

Das erfindungsgemäße Sensorsystem weist den Vorteil auf, dass die Signalübertragung zwischen dem ersten Sender und dem Empfänger auf einer Vielzahl von physikalischen Größen beruhen kann. Die Signalübertragung kann elektronisch, kapazitiv, induktiv oder elektromagnetisch erfolgen. Eine Übertragung kann mittels eines elektrischen Stroms, einer elektrischen Spannung oder einer elektrischen oder thermischen Leistung stattfinden. Ebenso ist es möglich, eine fluidische, pneumatische, hydraulische Signalübertragung zu realisieren. Als übertragenes Signal kann auch die Veränderung einer physikalischen Eigenschaft (z. B. Druck) oder chemischen Eigenschaft eines sich bewegenden Mediums dienen. Beispielsweise können Wasser oder Öle eingesetzt werden. Auch ist die Veränderung der Eigenschaft eines Festkörpers als Signal denkbar.

Sowohl das erfindungsgemäße Verfahren wie auch das erfindungsgemäße Sensorsystem ermöglichen die Bestimmung der Übertragungseigenschaften einer Übertragungsstrecke oder das Erfassen von Objekten oder Medien oder Änderung von Medien innerhalb der Übertragungsstrecke zwischen dem Sender und dem Empfänger. Selbstverständlich lassen sich auch mehrere Übertragungseigenschaften der Übertragungsstrecke detektieren. Solche Übertragungseigenschaften können beispielsweise Brechungsindizes sein. Es können aber auch Objekte vermessen werden, wobei insbesondere die Objektdichte, die Objektgröße oder die Objektzusammensetzung detektiert werden können. Auch ist die Lage eines Objekts im Raum, der Abstand des Objekts zum Empfänger und die Objektorientierung im Raum zu erfassen. Dies kann beispielsweise durch eine optische Erfassung z. B. mit (sichtbarem oder nicht sichtbarem) Licht, infraroter Strahlung, Radarstrahlung oder ähnlicher Strahlung erfolgen. Das System eignet sich jedoch auch, die Transparenz oder Transmission, insbesondere eine spektralabhängige oder farbabhängige Transmission zu detektieren. Daneben lassen sich auch die Dämpfung oder Absorption von Werkstoffen, insbesondere die spektralabhängige oder farbabhängige Absorption ermitteln. Des Weiteren eignet sich das Verfahren, um die Reflektivität oder die Reflektion oder eine Phasenverzögerung zu erkennen, die durch Objekte oder beim Durchgang von Strahlung oder anderen physikalischen Größen durch ein Medium erfolgt. Es ist selbst möglich, Kernspinwechselwirkungen oder Kernspinresonanzen zu erfassen. Diese führen beispielsweise im Falle eines magnetischen Signals zu einer Verzögerung der Antwort in Größe der Spin-Relaxationszeit der Atomkerne, wenn diese sich in einem magnetischen Gleichfeld befinden.

Darüber hinaus ist es möglich, Leitfähigkeiten oder Widerstandswerte, Permeabilitäten oder Dielektrizitätswerte, Verlustwinkel etc. zu detektieren. Ebenso können Geschwindigkeitsverteilungen beispielsweise durch Vergleich von Verteilungen zu verschiedenen Zeitpunkten ermittelt werden.

In Abhängigkeit von der zu ermittelnden Größe der Eigenschaften der Übertragungsstrecke sind die Sender und Empfänger auszubilden, beispielsweise als Antennen, Kontakte, Elektroden, Spulen, Ventile, LEDs, Fotoempfänger, Drucksensoren, etc.. Einige Beispiele werden exemplarisch anhand der nachfolgenden Figuren gegeben.

Die Erfindung wird nachfolgend anhand von in den Figuren dargestellten besonderen Ausführungsformen näher erläutert. Die dort dargestellten Besonderheiten können einzeln oder in Kombination verwendet werden, um bevorzugte Ausgestaltungen der Erfindung zu schaffen. Die beschriebenen Ausführungen stellen keine Einschränkung der durch die Ansprüche in ihrer Allgemeinheit definierten Erfindung dar.

Es zeigen:

Fig. 1          eine schematische Darstellung eines Sensorsystems gemäß der Erfindung und eines Generators;

Fig. 2          ein Strukturbild einer ersten Ausführungsform des Sensorsystems gemäß Figur 1;

Fig. 3 bis 5    Strukturbilder von weiteren alternativen Ausführungsformen des erfindungsgemäßen Sensorsystems;

Fig. 6          das Prinzipschaltbild einer alternativen Ausführungsform des Sensorsystems mit orthogonalen Basissignalen auf Basis von Doppelpulsen;

Fig. 7          den zeitlichen Verlauf der Signale des Sensorsystems gemäß Figur 6;

Fig. 8          eine alternative Ausführungsform des Sensorsystems mit einem orthogonalen Basissignal;

Fig. 9          ein Prinzipbild der Kompensation im Vergleich zum Stand der Technik;

Fig. 10, 11     weitere alternative Ausführungsformen des Sensorsystems mit mehreren orthogonalen Basissignalen;

Fig. 12         ein Prinzipschaltbild einer Ausführungsform des Sensorsystems mit zwei Sendern und einem Empfänger;

Fig. 13         ein Prinzipschaltbild einer alternativen Ausführungsform des Sensorsystems mit einem Sender und zwei Empfängern;

Fig. 14         das Prinzipschaltbild eines Korrelators zum Aufbau eines mehrstufigen Tomographen mit mehreren Sendern und Empfängern;

Fig. 15a,       b ein Diodenspektrometer als Gassensor in einkanaliger bzw. mehrkanaliger (hier zweikanaliger) Form;

Fig. 16a bis c    eine Time-of-Flight-Messung mittels Dioden zur Abstandsmessung;

Fig. 17a,    b ein Prinzipschaltbild eines Sensorsystems zur Messung von elektromagnetischen Wellen mittels kompensierender magnetischer Antennen;

Fig. 18    ein Prinzipschaltbild eines Sensorsystems zur Messung mittels kompensierter magnetischen Antennen;

Fig. 19    eine schematische Ansicht einer Antenne aus Fig. 18;

Fig. 20    ein Prinzipschaltbild eines Sensorsystems zur Messung mittels einer kompensierten magnetischen Antenne mit drei Spulen;

Fig. 21    eine schematische Ansicht einer Antenne aus Fig. 20;

Fig. 22    ein Prinzipschaltbild eines Sensorsystems zur Messung mittels kompensierter elektrostatischer Antennen;

Fig. 23    eine schematische Ansicht einer elektrostatischen Antenne gemäß Fig. 22;

Fig. 24    ein Prinzipschaltbild eines Sensorsystems zur Messung von Schallwellen.

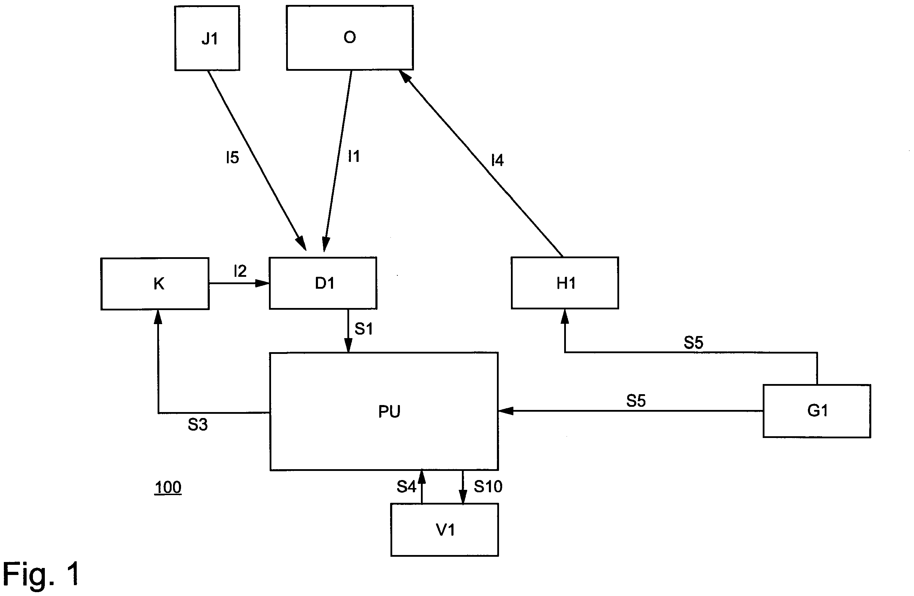

Fig. 1 zeigt ein Sensorsystem 100 gemäß der Erfindung und einen Generator G1 zur Erzeugung eines Speisesignals S5 für das Sensorsystem 100.

Das Sensorsystem 100 umfasst einen ersten Sender H1, einen zweiten Sender, der ein Kompensationssender K ist, und einen Empfänger D1. Das Sensorsystem 100 wird eingesetzt, um die Übertragungseigenschaften einer ersten Übertragungsstrecke zwischen dem ersten Sender H1 und dem Empfänger D1 zu messen. Der erste Sender H1 wird mit dem Speisesignal S1 des Generators G1 gespeist und sendet ein erstes Signal 14 in die Übertragungsstrecke hinein, das im Empfänger D1 detektiert wird. Der Kompensationssender K, auch Kompensator genannt, sendet ein zweites Signal in eine zweite Übertragungsstrecke, das ebenfalls von dem Empfänger D1 detektiert wird. In dem Empfänger D1 überlagern sich die beiden Signale linear, bevorzugt durch Addition. Der Empfänger D1 gibt ein Empfängerausgangssignal S1 aus, das an eine Verarbeitungseinheit PU übermittelt wird.

Das Empfängerausgangssignal S1 und das von dem Generator G1 erzeugte Speisesignal S5 sind derart ausgebildet, dass sie je einen Vektor in einem Prä-Hilbert-Raum bilden. In der Verarbeitungseinheit PU erfolgt eine Hilbert-Projektion von dem Empfängerausgangssignal S1 und dem Speisesignal S5 derart, dass ein Projektionsbildsignal S10 gebildet wird. In einem Verstärker V1 wird dieses Signal S10 verstärkt und als Signal S4 zur Verarbeitungseinheit PU zurückgegeben. Selbstverständlich kann die Verstärkung auch innerhalb der Verarbeitungseinheit PU erfolgen, wenn der Verstärker V1 Bestandteil der Verarbeitungseinheit ist.

Die Verarbeitungseinheit PU führt dann eine Rücktransformation des Ausgangssignals S4 mit dem Speisesignal S5 durch, wobei die beiden Signale bevorzugt miteinander multipliziert werden. Über einen Zwischenschritt eines Vorsignals wird schließlich zunächst das Vorsignal S6 und typischerweise durch Addition einer Konstante das Kompensationssignal S3 gebildet, mit dem der Kompensationssender K dann so gespeist wird, so dass eine rückkoppelnde Regelung mit dem Empfängerausgangssignal S1 erfolgt.

Befindet sich ein Objekt O in der Übertragungsstrecke, so wird das Sendesignal 14 des ersten Senders H1 durch Anwesenheit des Objekts geändert, z. B. reflektiert. Somit detektiert der Empfänger D1 statt des Sendesignals 14 das durch die Eigenschaften des Objekts und der Übertragungsstrecke veränderte Signal I1. Daneben detektiert der Empfänger ebenfalls in der Regel ein parasitäres Störsignal 15, das von einem Störer J1 ausgestrahlt wird. Selbstverständlich wird der Fachmann sich stets bemühen, solche Störer zu minimieren.

Wenn beispielsweise eine optische Detektion eines Objekts in der Übertragungsstrecke erfolgen soll, wird beispielsweise Licht im sichtbaren oder nicht sichtbaren Bereich ausgesendet. Der erste Sender H1 und der Kompensationssender K sind in diesem Fall Lichtsender, beispielsweise eine LED oder eine Laserdiode. Der Empfänger ist in diesem Beispiel ein Lichtdetektor, beispielsweise eine Photodiode oder Photo-LED. Somit lässt sich der Abstand, die Lage, eine Bewegung, oder die Reflektivität des Objekts O in der Übertragungsstrecke zwischen dem ersten Sender H1 und dem Empfänger D1 ermitteln.

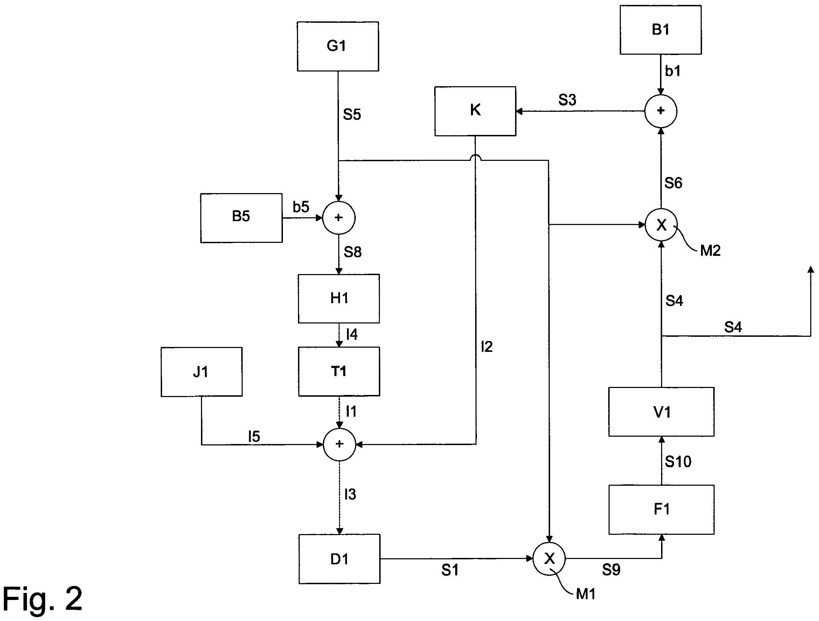

Fig. 2 zeigt den prinzipiellen Aufbau des Sensorsystems 1 einschließlich der zu verarbeitenden Signalstränge. Der Generator G1, kann optional Teil des Sensorsystems 100 sein. Es ist jedoch auch möglich, die Verarbeitungseinheit PU mittels eines IC oder ASICs aufzubauen, das den Generator nicht umfasst. Beide Ausführungen sind denkbar und haben ihre entsprechenden Vorteile.

Das von dem Generator G1 erzeugte Speisesignal S5 ist beispielsweise bipolar und symmetrisch um einen Nullwert herum. Sein Mittelwert ist dann Null. Daher wird, um beispielsweise LEDs ansteuern zu können, bevorzugt zum Signal S5 ein Biaswert b5 addiert, bevor das Signal als Signal S8 den ersten Sender speist. Der Biaswert b5 kann in einem Bias-Generator B5 erzeugt werden. In der Regel ist der Biaswert b5 ein Offset-Wert, um das Speisesignal S5 anzuheben, da das auf einer Funktion beruhende Signal prinzipiell auch negative Werte annehmen könnte. Einige Klassen von Sendern, beispielsweise Leucht-Dioden, können jedoch keine negativen Werte verarbeiten.

Sender können beispielsweise modulierbare Vorrichtungen wie Spulen, Antennen, Kondensatorplatten, Kontakte, Lautsprecher, Leuchtmittel, Leuchtdioden, Laser-Dioden, Partikel-Quellen, Ionen-Quellen, steuerbare Ventile für fluidische, gasfürmige und andere fließfähige Materie, Plasmaquellen etc. sein.

In Fig. 2 ist die Übertragungsstrecke zwischen dem ersten Sender H1 und dem Empfänger D1 und deren Einfluss auf die Signale in der Übertragungsstrecke durch die Komponente T1 dargestellt. Der Einfluß eines in der Übertragungsstrecke positionierten Objekts O auf die erste Übertragunsgstrecke wird neben anderen Signalmodifikationen in der Übertragungsstrecke durch T1 beschrieben. Das Sendesignal 14 wird deshalb durch T1 in das Sendesignal 11 gewandelt. Zu diesem Signal wird ein eventuelles Störsignal 15 eines Störers J1 sowie das Kompensationssendesignal 12 des Kompensators addiert und als Signal 13 im Empfänger D1 empfangen.

Die in der Verarbeitungseinheit PU durchgeführte Hilbert-Projektion zwischen dem Speisesignal S5 und dem Empfängerausgangssignal S1 wird durch eine Multiplikation mittels eines ersten Multiplizierglids M1 und die anschließende Filterung durchgeführt. Das bei der Multiplikation gebildete Detektionssignal S9 wird in einem Filter F1 gefiltert, dessen Ausgangssignal als Projektionsbildsignal S10 einem ersten Verstärker V1 zugeführt wird. Das Ausgangssignal S4 des ersten Verstärkers wird bevorzugt als Messwert weiterverarbeitet und ausgegeben. Intern wird das Ausgangssignal S4, das den Amplitudenwert darstellt, aus dem Hilbert-Raum rücktransformiert in den Zeitbereich. Dies erfolgt durch Multiplikation mit dem Speisesignal S5 mittels eines zweiten Multiplizierglids M2. Das so gebildete Vorsignal S6 wird bevorzugt mit einem Biaswert B1 addiert, der von einem Biasgenerator B1 erzeugt wird. Dieser Biaswert ist wieder notwendig, um mit dem Signal beispielsweise eine LED ansteuern zu können. Die addierten Signale werden als Kompensationssignal S3 dem Kompensator K so zugeführt, dass eine rückkoppelnde Regelschleife entsteht.

Das so beschriebene System ist geeignet, Amplitudenänderungen des durch den ersten Sender H1 ausgesendeten Signals zu messen.

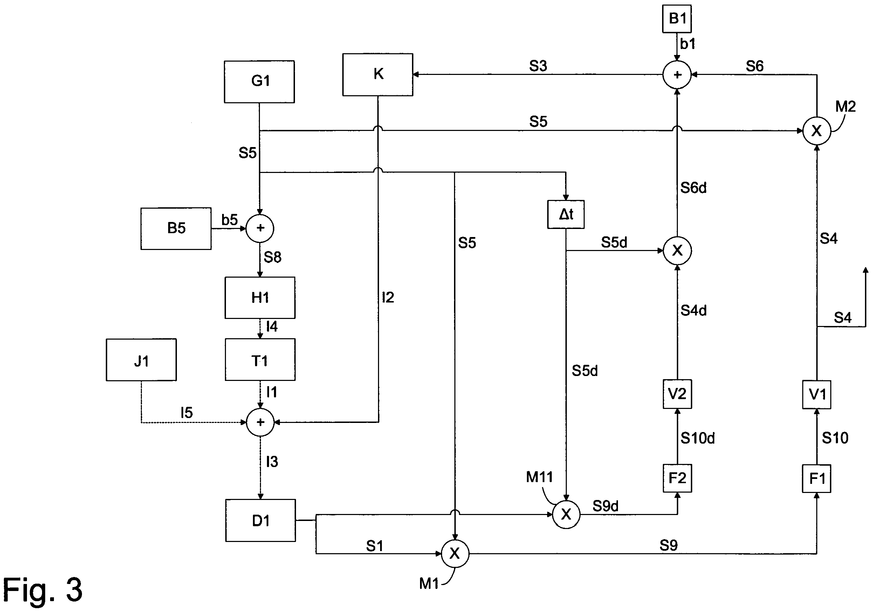

Da die Amplitudenmessung zur Bestimmung eines Objektes in der Übertragungsstrecke T1 bei verschiedenen reflektiven Objekten nicht geeignet ist, eine zuverlässige Detektion der Lage oder Bewegung durchzuführen, muss auch die Verzögerung (z.B. Lichtlaufzeit) detektiert werden (Fig. 3). Hierzu wird mittels eines Verzögerungsglieds Δt ein gegenüber dem Speisesignal S5 verzögertes Signal S5d aus dem Speisesignal S5 gebildet. Es wird parallel verarbeitet zu der Verarbeitung des auf dem Speisesignal S5 beruhenden Sendesignals. Der Teil der Verarbeitungseinheit wird dazu im wesentlichen zur Verarbeitung des Signals S5d dupliziert. Dazu wird in dem duplizierten Verarbeitungsstrang oder einer teilweise duplizierten, zusätzlichen Verarbeitungseinheit eine weitere Hilbert-Projektion von dem verzögerten Signal S5d und dem Empfängerausgangssignal S1 durchgeführt. Die Hilbert-Projektion erfolgt ebenfalls typischerweise durch Multiplikation mittels eines Multiplizierglids M11 zum Signal S9d und anschließender Filterung mittels eines Filters F2 zum Signal S10d sowie einer Verstärkung mittels eines Verstärkers V2. Das Verstärkerausgangssignal S4d wird durch Multiplikation mit dem verzögerten Signal S5d zum verzögerten Vorsignal S6d rücktransformiert. Anschließend wird das verzögerte Vorsignal S6d zu dem Vorsignal S6 des Hauptregelstrangs addiert, um nach Addition der Konstante b1 das Kompensationssignal S3 zu bilden. Das verzögerte Vorsignal S6d entspricht der durch ein Objekt hervorgerufenen Verzögerung Dieses Verfahren hat allerdings einen wesentlichen Nachteil: Es erfolgt folglich eine mittelnde Laufzeitmessung des Sensorsystems.

Das System liefert die Messwerte S4 und S4d. Diese repräsentieren die Dämpfung in der Übertragungsstrecke und die Verzögerung. Allerdings sind die beiden Signale nicht unabhängig. Das bedeutet, dass eine Änderung der Dämpfung im Übertragungskanal beide Signale - allerdings unterschiedlich - ändert. Gleiches gilt für eine Änderung der Verzögerung. Dann allerdings unterscheiden sich die Änderungen von einer Dämpfungsänderung. Eine Rücktransformation durch eine Auswerteeinheit ist also möglich.

Somit ist die Verarbeitung eines lediglich verzögerten, jedoch nicht orthogonalen Signals schwierig und aufwendig und damit nicht kostenoptimal.

Aus diesem Grund wird bevorzugt statt eines verzögerten Signals ein orthogonales Basissignal für die zusätzliche Hilbert-Projektion verwendet. Das zusätzliche orthogonale Basissignal S5o wird beispielsweise aus der Differenz zwischen einem um einen Zeitraum Δt vor dem Speisesignal S5 vorlaufenden Signal S5v und einem um den gleichen Zeitraum Δt nachlaufenden Signal S5d gebildet.

Dazu wird das von dem Generator gebildete vorlaufende Signal S5v zunächst um Δt verzögert, um daraus das Speisesignal S5 zur Speisung des ersten Senders H1 zu bilden. In der Verarbeitungseinheit wird dann das Speisesignal S5 nochmals durch ein weiteres Verzögerungsglied zu dem Signal S5d verzögert. Die Differenzbildung von S5d und S5v führt zu einem orthogonalen Signal S5o, das orthogonal zu dem Speisesignal S5 ist. Folglich ist das Skalarprodukt aus S5 und S5o stets Null.

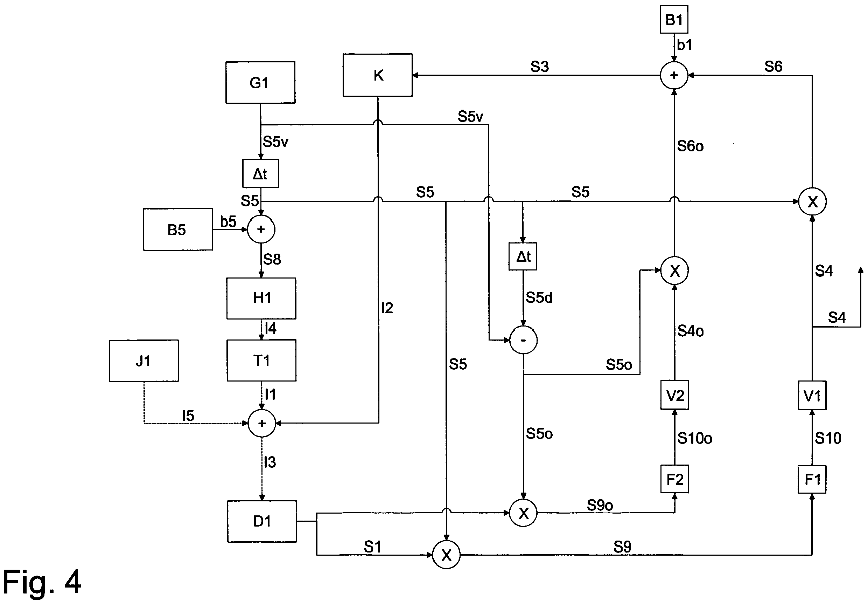

Fig. 4 zeigt die Ausführungsform des Sensorsystems, das ein derartiges orthogonales Basissignal verarbeitet.

Hierbei wird im Vergleich zu Fig. 3 statt des verzögerten Signals S5d nun das orthogonale Signal S5o in dem parallelen Verarbeitungsstrang verarbeitet. Die beiden Systeme unterscheiden sich also in ihrer Struktur nur in der Art und Bildung des verwendeten zweiten Signals (S5o statt S5d).

Gemäß dem vorgeschlagenen Sensorsystem und dem erfindungsgemäßen Verfahren erfolgt also eine Vektoraddition im Syntheseteil der Verarbeitungseinheit und eine Skalarproduktbildung orthogonaler Basissignale in dem Analyseteil. Dies hat den ganz wesentlichen Vorteil gegenüber dem Stand der Technik, dass auch mehr als zwei Parameter über mehr als zwei orthogonale Funktionen vermessen werden können. Technisch lässt sich diese, auf einer Summation basierende Verarbeitung sehr einfach realisieren und ist grundsätzlich zunächst auch für beliebige Signale bzw. Funktionen geeignet, was einen weiteren Vorteil gegenüber dem Stand der Technik darstellt, der lediglich monofrequente, getaktete Signale zulässt. Es erfolgt also insbesondere keine Phasenregelung, wie sie bei den im Stand der Technik bekannten kompensierenden Messverfahren angewendet wird, sondern stattdessen eine Vektoraddition.

Die Verwendung eines orthogonalen Basissignals bedeutet in der in Figur 4 beispielhaft dargestellten Weise letztendlich die Beobachtung des Objektes in einem bestimmten Zeitschlitz. Der Vollständigkeit halber sei an dieser Stelle erwähnt, dass die Verwendung orthogonaler Basissignale nicht auf dieses Zeitschlitzbasierende Verfahren limitiert ist. Soll eine genauere Beobachtung durch mehrere Zeitschlitze durchgeführt werden, werden bevorzugt mehrere orthogonale Basissignale S5oi erzeugt, die zu dem Speisesignal S5 orthogonal sind.

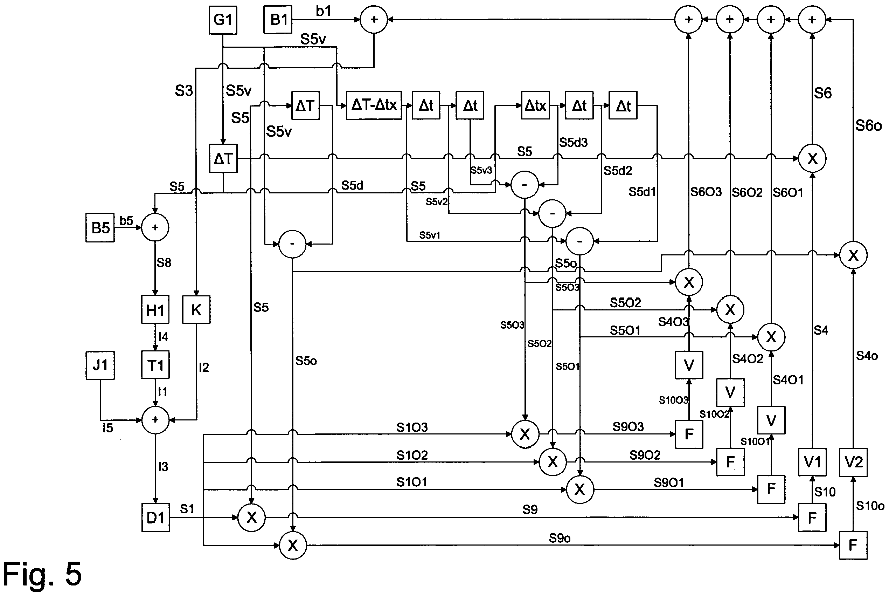

Fig. 5 zeigt ein Beispiel eines Systems mit mehreren orthogonalen Basissignalen S5o, S5o1, S5o2 und S5o3. Hierbei sind typischerweise $\Delta T \gg \Delta t$ und $\Delta tx < \Delta T - 2\Delta t$. Für $\Delta T$ gilt vorzugsweise $\Delta T < 1/(4\pi\omega_{max})$. Diese Basissignale sind jedoch nur "semiorthogonal", da sie zwar alle orthogonal zu dem Speisesignal S5 sind, jedoch nicht untereinander orthogonal sind. Die Verarbeitung und Auswertung der erzeugten Signale S4, S4o, S4o1, S4o2 und S4o3 in dem nachfolgenden System, ist daher technisch schwierig. Deshalb wird bevorzugt ein System aus vollständig orthogonalen Basissignalen aufgebaut.

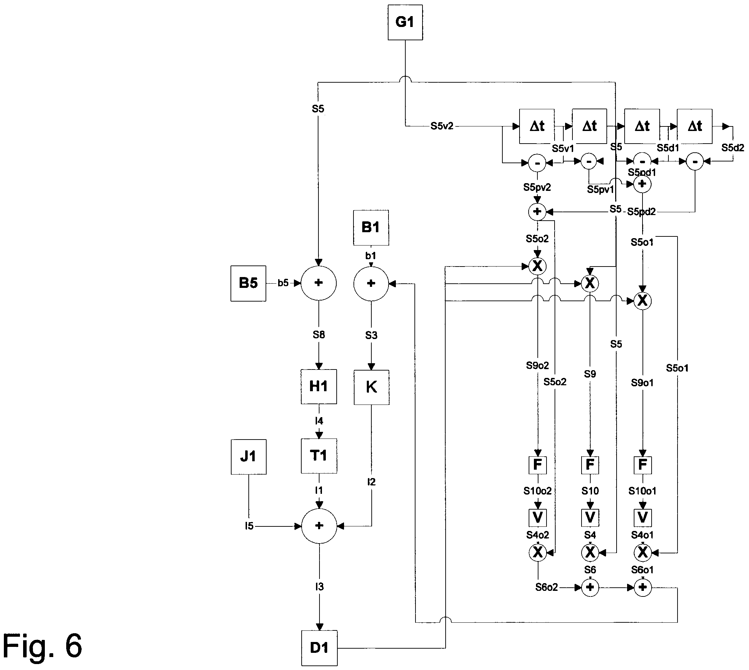

Fig. 6 zeigt einen Sensor mit drei orthogonalen Basissignalen (S5, S5o1, S5o2). Dazu werden zwei vorlaufende und zwei nachlaufende Signale generiert.

Allgemein können mehrere orthogonale Signale erzeugt werden. Dazu werden zunächst n vorlaufende Signale S5vi generiert, wobei i die jeweilige Nummer angibt (i = 1, 2, 3, ..., n). Ein Signal S5vi läuft dem Signal S5 also um i Perioden (Zeitraum) $\Delta t$ voraus. Die maximale Vorlaufzeit beträgt $\Delta T = n \cdot \Delta t$. Gleichzeitig werden analog zum Signal S5 auch n nachlaufende Signale S5di generiert. Ein Signal S5di läuft dem Signal S5 um i Zeiträume $\Delta t$ nach. Die maximale Nachlaufzeit beträgt wiederum $\Delta T = n \cdot \Delta t$.

Aus diesen Signalen lassen sich beispielsweise vorlaufende und nachlaufende Pulssignale erzeugen und zwar beispielsweise jeweils $2 \cdot n$ Pulssignale. Unter der Voraussetzung, dass das Speisesignal die Werte +1, -1 annehmen kann, ergibt sich beispielsweise für die vorlaufenden Pulse

$$S5pvi \ = \ \frac{1}{2} \cdot \Big( S5vi - S5v(i-1) \Big),$$

wobei S5v0 = S5 ist. Entsprechendes gilt dann für die nachlaufenden Pulssignale:

$$S5pdi \ = \ \frac{1}{2} \cdot \Big( S5d(i-1) - S5di \Big) \ \text{mit S5d0 = S5.}$$

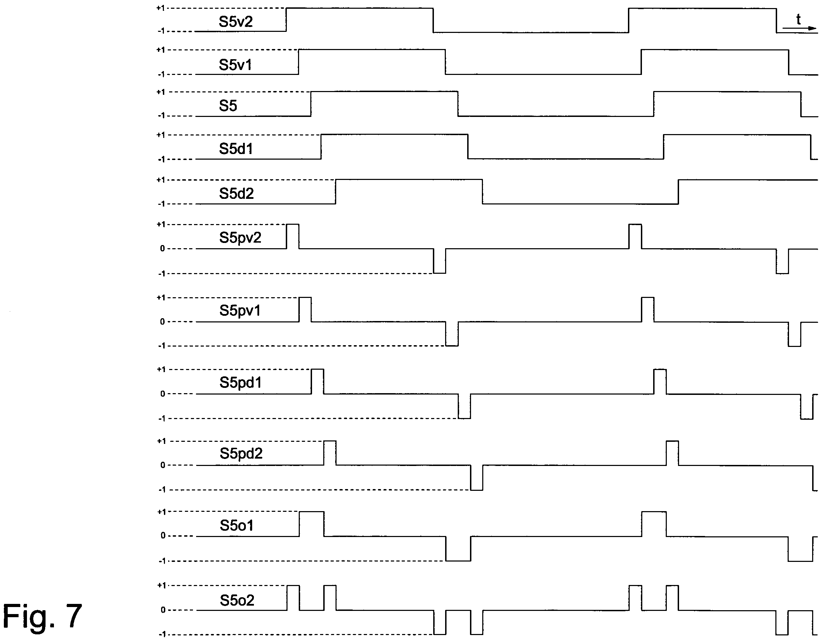

Die Pulssignale sind dann jedoch dreiwertig, in Abhängigkeit von den Werten i. Es kann gezeigt werden, dass die daraus gebildeten orthogonalen Basissignale S5o1 und S5o2 sowohl orthogonal zu S5 als auch orthogonal zueinander sind. Beispielhaft ist dies in Figur 7 für zwei vorlaufende und zwei nachlaufende Pulssignale gezeigt.

Es ist ersichtlich, dass die orthogonalen Basissignale S5oi zusammen mit dem Speisesignal S5 ein orthogonales Basissignalsystem bilden. Allerdings ist die Verarbeitung von vorlaufenden Pulsen technisch nicht gewünscht, da vorlaufende Pulse auch im Kompensationssignal vorkommen. Diese vorlaufenden Pulse sind jedoch notwendig, da das Speisesignal S5 mit jedem der nachlaufenden Pulse überlappt.

Wünschenswert ist deshalb, ein orthogonales Basissignalsystem ohne vorlaufende Pulse zu erzeugen. Solche Pulse (S5oi ohne vorlaufende Pulse) werden im Folgenden mit S5pi bezeichnet. Betrachtet man die Ursache für die Notwendigkeit vorlaufender Pulse, so stellt man fest, dass dies einzig der Tatsache geschuldet ist, dass ohne die vorlaufenden Pulse die orthogonalen Basissignale S5pi in der Hilbert-Projektion mit S5 eine von Null abweichende Größe liefern würden. Die einfachste Methode, dies zu umgehen ist, den Signalsatz bestehend aus S5 und den S5pi zu orthogonalisieren. Da die S5 und S5pi vorbestimmt sind, kann dies schon in der Konstruktionsphase erfolgen. Verfahren findet man z.B. in BRONSTEIN Kap. 19.2.1.3 "Orthogonalisierungsverfahren". Da die S5pi (S5oi ohne vorlaufende Pulse) bereits orthogonal zueinander sind, wird deren jeweiliges Skalarprodukt, bestehend aus S5 skalar-multipliziert mit dem jeweiligen Signal S5pi, jeweils anschließend von S5 abgezogen. Man erhält das Signal S5r. Dieses ist nun orthogonal zu allen S5pi (S5oi ohne vorlaufende Pulse). Auf diese Weise verfügt man über einen untereinander orthogonalen Basissignalsatz bestehend aus den S5pi und S5r.

Damit die Orthogonalität erreicht wird, muss das Signal S5 im Mittel wieder Null sein, also keinen Bias-Anteil enthalten. Diese Eigenschaft gilt dann automatisch auch für die S5pi-Signale.

Das Empfängerausgangssignal S1 kann deshalb im Bereich einer möglichen messbaren Verzögerung n • AT (n= maximaler Wert von i) im Wesentlichen zu Null geregelt werden. Das aus dem Speisesignal generierte Signal S5r lässt sich als Differenz von S5 zur Summe aller nachlaufenden Pulse darstellen. Somit entspricht

$$S5r \;=\; \tfrac{1}{2} \cdot (S5dn + S5),$$

wobei S5dn der um n Perioden verzögerte Puls ist.

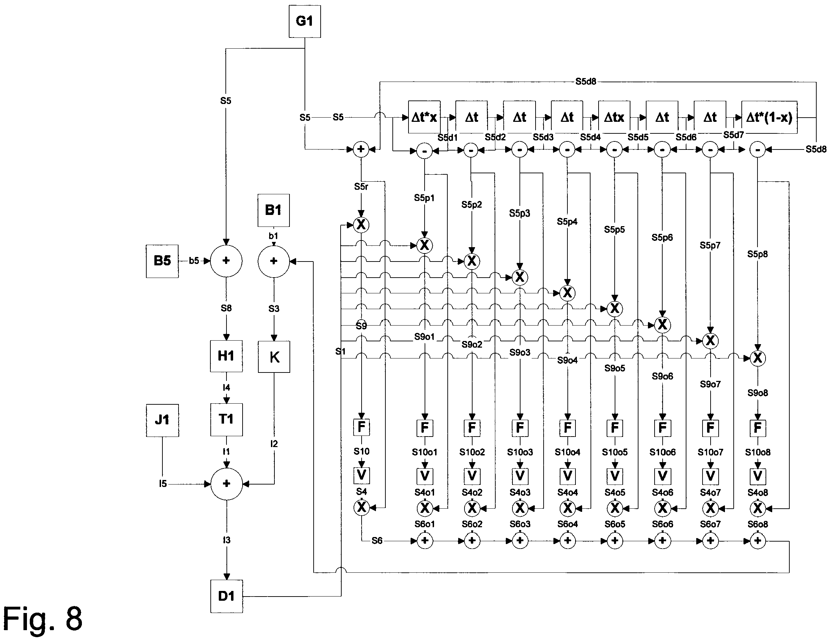

Ein derartiges System ist in Figur 8 gezeigt, das einen orthogonalen Basissignalsatz für beliebige quasi digitale getaktete und ungetaktete Eingangssignale erzeugt. Das gezeigte Sensorsystem kann acht Zeitschlitze für die Detektion von Reflektionen aufgrund eines Objekts beobachten. Die Länge des letzten und des ersten Pulses können jeweils kompensierend zueinander skaliert werden. Selbstverständlich können auch weitere Zeitschlitze parallel beobachtet werden, dazu ist es lediglich notwendig, weitere verzögerte Pulse zu erzeugen und zu verarbeiten. Dies ist wichtig, wenn die Reaktionszeit des Gesamtsystems gesenkt werden soll. Soll mit dem System beispielsweise ein optisches Radar aufgebaut werden, so kann es Applikationen geben, für die aufeinanderfolgende Messungen mit einem unterschiedlichen Skalierungsfaktor x ausreichend sind. In anderen Anwendungen kann aber die Zeit für weitere Messungen nicht zur Verfügung stehen. In diesen Fällen ist es sinnvoll, stattdessen mit mehr Kanälen (S5pi) zu messen.

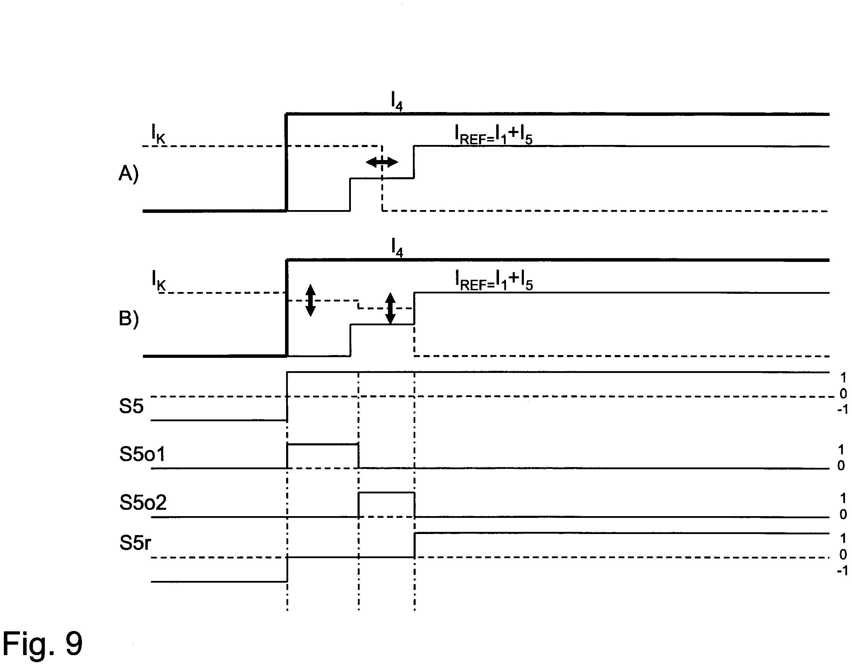

Fig. 9 zeigt im oberen Bild (A), wie im Stand der Technik eine Kompensation mittels einer mittelnden Phasenregelung des Kompensationssignals durchgeführt werden kann. Durch Anwesenheit eines Objekts wird das ausgestrahlte Sendesignal I4 des ersten Senders im Übertragungskanal verändert und ein reflektiertes Signal im Empfänger D1 empfangen. Zur Kompensation der Reflektion wird das Kompensationssignal $I_K$ des Kompensationssenders K in seiner Phase verschoben. Insbesondere wenn ein gestuftes Reflektionssignal empfangen wird, ist diese Kompensation ungenau.

Soll beispielsweise bei der Anwendung als optisches Radar ein Pfahl vor einer Wand detektiert werden, so regelt das System auf einen systemspezifischen Mittelwert zwischen Wand und Pfahl aus. Der Pfahl wird also nicht zuverlässig erkannt. Ein Auto, dass ein solches Radar als Einparkhilfe benutzt, fährt ohne weitere Schutzmaßnahmen vor den Pfahl, da der Fahrer einen größeren Abstand gemeldet bekommt, als der real zutreffende.

Das untere Bild (B) in Fig. 9 zeigt die nicht mittelnde Regelung durch Zumischung mehrerer (konkret zweier) orthogonaler Basissignale zum Kompensationssignal $I_K$ (entsprechend 12) durch Vektoraddition. Hierdurch lässt sich eine genauere Kompensation erzielen, was die Vorteile des erfindungsgemäßen Verfahrens eindrucksvoll sichtbar macht. Generalisierend kann gesagt werden: Je höher die Anzahl der orthogonalen Basissignale, desto größer ist die erzielbare Auflösung und Präzision pro Messung. Die einzelnen Stufen in dem mehrstufigen Reflektionssignal können individuell durch eine rückkoppelnde Regelung der einzelnen orthogonalen Basissignale S4oi angepasst werden.

Da nur die Signalflanken ausgewertet werden, also Sprungfunktionen angewendet werden, liefern die Signale S4oi in Figur 8 nur eine integrierende Aussage. Bei der bereits angesprochenen Einparkhilfe bedeutet dies, dass ein Signal auf dem Ausgangssignal S4n bedeutet, dass irgendwo davor eine Reflektion stattgefunden hat. Nur wenn ein Signal S4on ein Signal zeigt und das Signal S4o(n-1) nicht, ist klar, dass die Reflektion dem n-ten Zeitschlitz zuzuordnen ist. Daher müssen die Signale gegeneinander differenziert werden. (Dies entspricht dem Übergang von einem sprungfunktionsbasierenden System zu einem mit einem Delta-Puls betriebenen System)

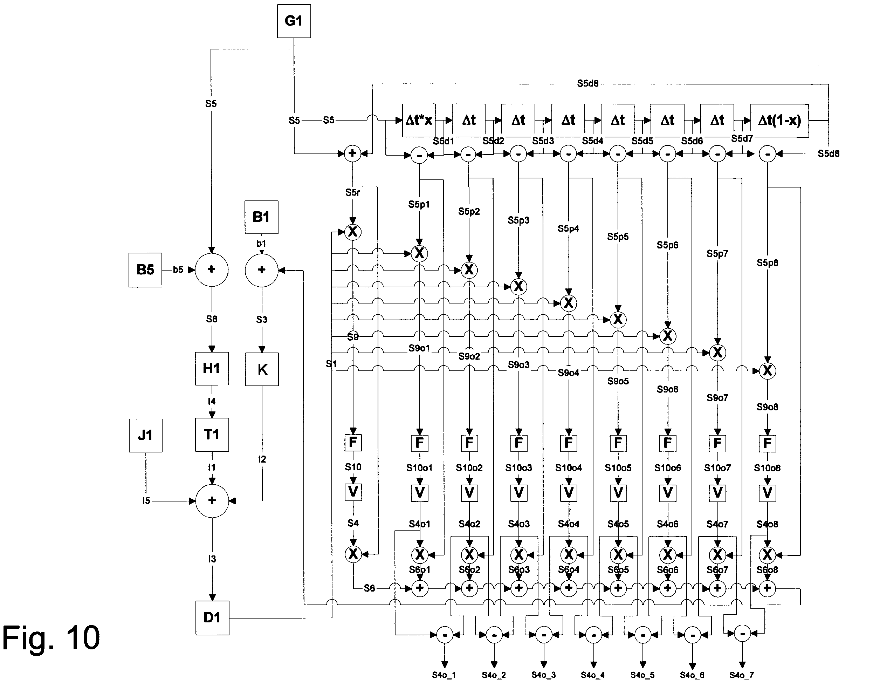

Fig. 10 zeigt nun beispielhaft ein siebenkanaliges ortsauflösendes Sensorsystem mit einem orthogonalen Basissignalsatz das diesem Zweck dient. Hierbei können der erste und der letzte Kanal des Systems, also die zeitliche Verschiebung mit einem beliebigen Faktor x skaliert werden. Für jeden Zeitschlitz existiert eine separate Regelung. Der wesentliche Unterschied ist jedoch die Differenzbildung an den Ausgängen (S40oi mit 1≤i≤7) aus S4oi und S4o(i+1). Hierdurch wird eine Reflektion dem Zeitschlitz zugeordnet, in dem diese stattfindet.

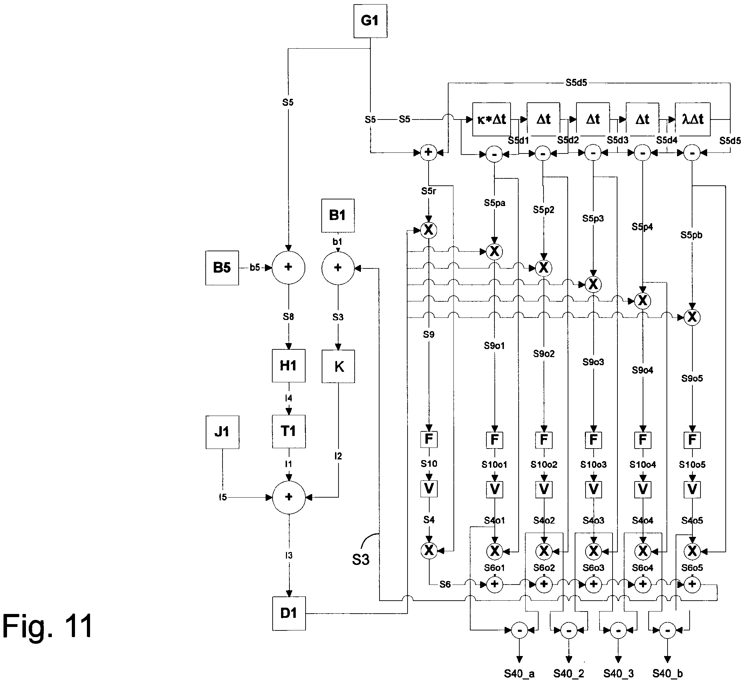

In der Regel ist es jedoch zu aufwendig, für jeden Kanal i eine eigene Regelung aufzubauen. In den Fällen, in denen lediglich festgestellt werden soll, ob die Reflektion in einem bestimmten Zeitfenster j erfolgt, können die K = j - 2 Basissignalpulse S5pi mit i = 1 bis i = (j - 2) zu einem Pulssignal S5pa zusammengefasst werden. Daher ist nur noch ein Verzögerungsglied mit K · ∆t notwendig. Die Pulse Spi für i = j - 1, i = j und i = j + 1 bleiben unverändert. Die λ = n - i - 2 Pulse S5pi für i = j + 2 bis i = n werden zu dem zweiten Basissignalpuls S5pb zusammengefasst. Auch für diese Pulse ist nur noch ein Verzögerungsglied mit einer Zeitverzögerung von λ · ∆t notwendig. Das System verfügt also lediglich über den orthogonalen Basissignalsatz bestehend aus den orthogonalen Pulssignalen S5pa, S5p (j - 1), S5pj, S5p (j +1), S5pb und S5r, wobei der Puls S5r gleich der Differenz aus dem Speisesignal S5 zu der Summe aller orthogonalen Basissignale ist. Das entsprechende Systemdiagramm ist in Fig. 11 gezeigt. Damit lässt sich die Anzahl der Verzögerungsglieder deutlich reduzieren.

Es ist jedoch vorteilhaft zwei oder wie hier drei Zeitschlitze (hier S5p2, S5p3 und S5p4) zu belassen. Die erste Differenz, die auch in Fig. 11 eingezeichnet ist, ergibt wie besprochen den Reflektionspunkt. Wird eine Differenz der Differenzen gebildet (nicht eingezeichnet), so lassen sich beispielsweise Flächenneigungen etc. der reflektierenden Flächen ermitteln.

Mit dem gezeigten System ist nun also eine Möglichkeit entwickelt worden, um eine Laufzeitmessung und eine eindimensionale Ortsbestimmung durchzuführen. Eine zweidimensionale Ortsbestimmung lässt sich damit im Gegensatz zum Stand der Technik einfach mittels einer Triangulation über zwei Messstrecken bei Verwendung zweier zueinander orthogonaler Speisesignale S5 und S5' insbesondere auch ohne Verwendung eines Zeitschlitzverfahrens verwirklichen. Neben dem Einsatz von zwei vollständigen Sensorsystemen entsprechend den gezeigten Systemen ist der Einsatz von Mischsensorsystemen jedenfalls denkbar. Die Mischung kann entweder darin bestehen, dass eine gemeinsame Nutzung der Sender und/oder eine gemeinsame Nutzung der Empfänger erfolgt.

In einer bevorzugten Ausführungsform weist das Sensorsystem eine Mehrzahl von Generatoren Gi auf, die mehrere Speisesignale S5i erzeugen. Eine entsprechende Mehrzahl von Sendern Hi wird mit dem jeweiligen Speisesignal S5i gespeist. Die sich daraus ergebende Mehrzahl von Übertragungsstrecken werden von den Sendesignalen I4i der jeweiligen Sender Hi zu dem Empfänger D1 übermittelt. In dem Empfänger werden die ersten Sendesignale I4i mit dem zweiten Signal 12 des Kompensationssenders K zu dem Empfängerausgangssignal S1 überlagert. Eventuelle Störsignale 15 werden ebenfalls überlagert.

In der Verarbeitungseinheit wird für jedes erste Speisesignal S5i jedes Senders Hi je ein Vorsignal S6i generiert, aus denen das Kompensationssignal S3 gebildet wird. Dies erfolgt bevorzugt durch Addition der Vorsignale S6i.

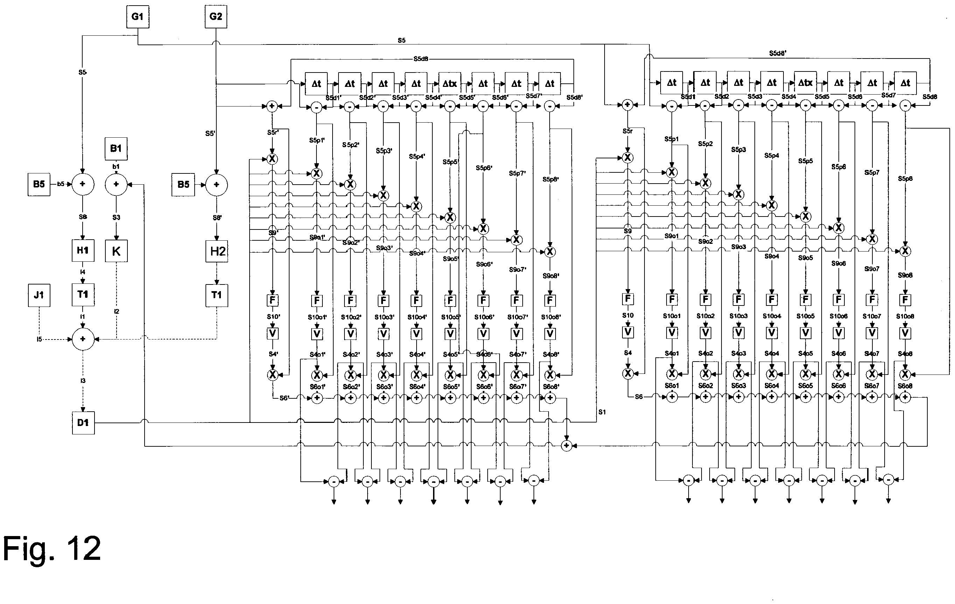

Ein derartiges System mit zwei Sendern H1, H2 und einem Empfänger D1 ist in Fig. 12 gezeigt.

In einer ebenfalls bevorzugten Ausführungsform weist das Sensorsystem mehrere Empfänger Di und mehrere Kompensationssender Ki auf, wobei jedem Empfänger Di ein Kompensationssender Ki zugeordnet ist. Bei nur einem ersten Signalsender H1 wird zu jedem Empfänger Di eine Übertragungsstrecke gebildet. Die einzelnen Empfänger Di überlagern die Signale des ersten Senders mit dem zweiten Signale des jeweiligen Kompensationssenders Ki zu einem Empfängerausgangssignal S1i. In der Verarbeitungseinheit wird für jeden Kompensationssender ein Kompensationssignal S3i zur rückkoppelnden Kompensation der Ausgangssignale der jeweiligen Empfänger Di erzeugt.

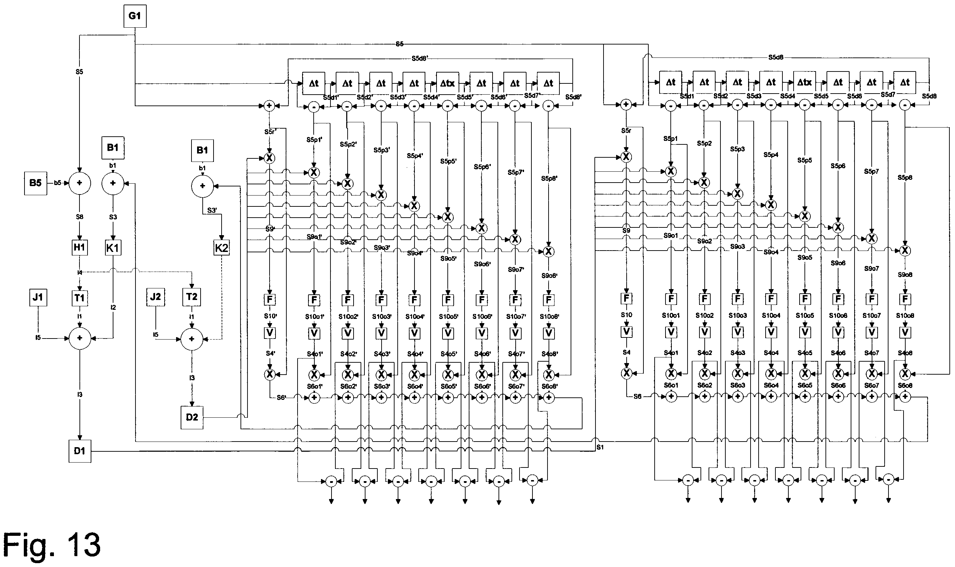

Ein derartiges System mit einem Sender und zwei Empfängern D1, D2 sowie zwei Kompensationssendern K1, K2 ist in Fig. 13 gezeigt. Selbstverständlich können auch mehrere Empfänger kombiniert werden. Es ist auch möglich, mehrere Sender und mehrere Empfänger miteinander zu kombinieren.

Neben den gerade gezeigten, einfachen Systemen sind auch komplexere Systeme denkbar, die eine Mehrzahl von Sendern Hi und eine Mehrzahl von Empfängern Dj sowie eine Mehrzahl von Kompensationssendern Kj aufweisen. Die Sender werden in der Regel aus je einem Generator gespeist, wobei auch ein Generator mehrere Sendesignale S5i erzeugen kann.

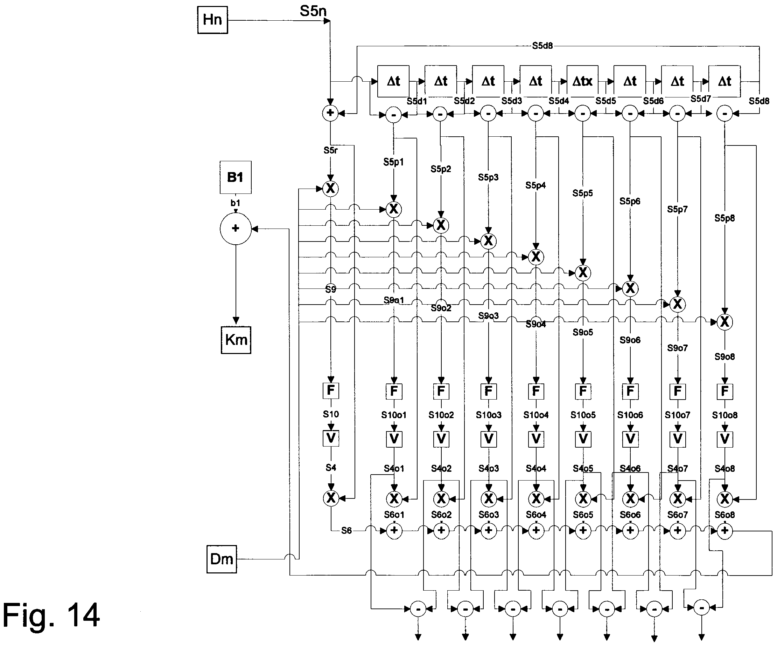

Für die n Generatoren werden beispielsweise n orthogonale Codes als Speisesignale festgelegt. Hierdurch werden Interferenzen zwischen den einzelnen Sendern Hi unterdrückt. Dies ist ein weiterer wesentlicher Unterschied zum Stand der Technik. Sollen die Übertragungseigenschaften der jeweiligen Übertragungsstrecken Tnm zwischen dem jeweiligen Sender Hn und Empfänger Dm und die jeweiligen Laufzeiten bestimmt werden, so ist die Vermessung der n • m Paare aus Sender und Empfänger notwendig. Daneben ist es auch möglich, m • n Verarbeitungseinheiten zu verwenden. Für jede Vermessung ist ein Korrelator notwendig. Ein Beispiel eines derartigen, auch Korrelator genannten Systemmoduls ist in Fig. 14 als schematisches Systemschaltbild gezeigt. Wie leicht zu erkennen ist, lässt sich das System aus Fig. 13 beispielsweise aus zwei Korrelatoren aufbauen.

Sofern das Bedürfnis bestehen sollte, mehr Empfänger als Kompensationssender zu verwenden, so kann die Lösung dieses Problems beispielsweise durch ein Zeitmultiplexverfahren erfolgen, in dem beispielsweise eine einzelne Verarbeitungseinheit für mehrere Empfänger verwendet wird, die über Multiplexe an die verschiedenen Sender und Empfänger geschaltet wird. Bevorzugt weist das Sensorsystem mehrere Empfänger Di und wenigstens einen, bevorzugt mehrere Kompensationssender Ki auf, wobei wenigstens zwei Empfängern D1, D2 ein Kompensationssender Ki gemeinsam zugeordnet ist. Zwischen dem ersten Sender H1 und je einem Empfänger Di wird eine Übertragungsstrecke gebildet, so dass in jedem Empfänger Di das erste Signal des ersten Senders mit dem Signal des entsprechenden Kompensationssenders Ki zu einem Empfängerausgangssignal S1i überlagert wird. In der Verarbeitungseinheit wird für jeden Kompensationssender Ki ein Kompensationssignal S3i erzeugt. Die Bildung der Kompensationssignale S3i erfolgt derart, dass jeweils zwischen den Verarbeitungseinheiten der Signale S1i der Empfänger Di, die sich mindestens einen Kompensationssender Ki teilen, im Zeitmultiplexverfahren hin und her geschaltet wird. Die Verarbeitungseinheiten, die infolge des Zeitmultiplexes zeitweise nicht zum Kompensationssignal S3i beitragen, sind so geschaltet, dass deren innere Zustände und Ausgangswerte sich während dieser Zeit nicht verändern. Die Verarbeitungseinheiten, die infolge des Zeitmultiplexes zeitweise zum Kompensationssignal S3i einen Beitrag liefern, verhalten sich für die Dauer ihres Beitrages derart, als ob kein Zeitmultiplex stattfinden würde.

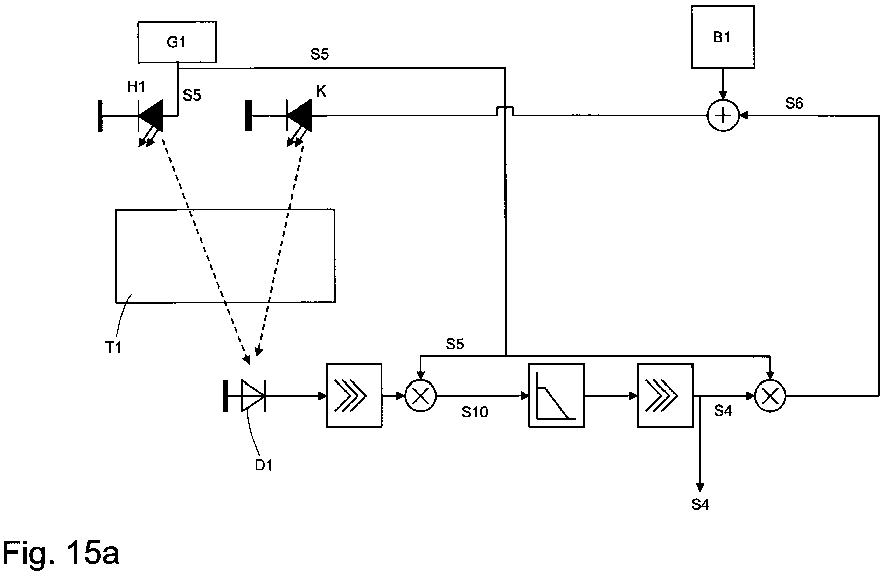

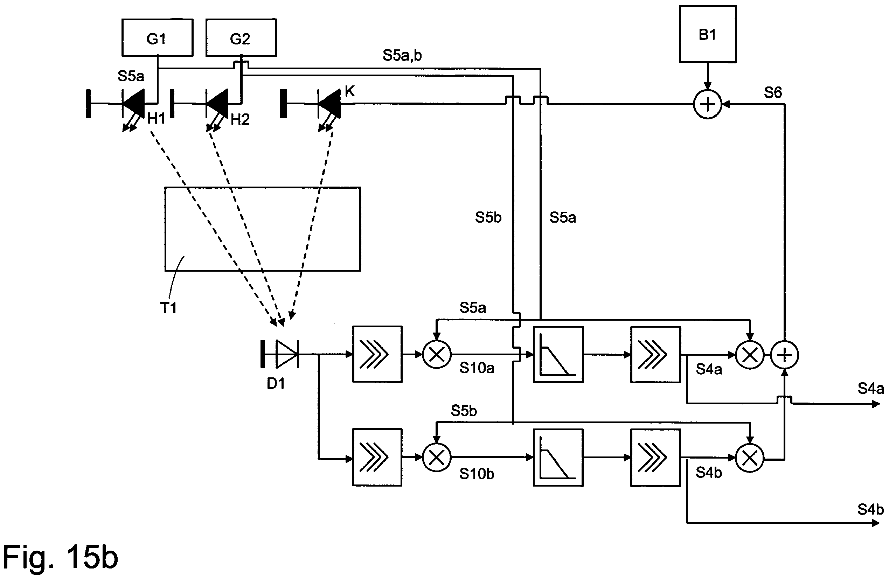

Fig. 15 zeigt ein Blockschaltbild eines erfindungsgemäßen Sensorsystems, das als Diodenspektrometer ausgebildet ist. Ein derartiges Spektrometer kann als Gassensor oder Titrationssensor eingesetzt werden. Das in Fig. 15a gezeigte System weist einen gemeinsamen Messkanal auf. Dabei ist der Sender H1 beispielsweise als Laserdiode ausgebildet, die im wesentlichen nur auf einer Absorptionswellenlänge strahlt. Die Messstrecke zwischen der Laserdiode und des als Photodiode ausgebildeten Empfängers D1 soll vermessen werden. Der Kompensationssender K ist eine Referenzdiode, die mit einer Wellenlänge strahlt, welche knapp neben der Absorptionswellenlänge liegt. Das Licht dieses Kompensationssenders unterliegt im Wesentlichen den gleichen Einflüssen wie das Licht des Senders H1. Einzige Ausnahme ist die verstärkte Absorption auf der Absorptionswellenlänge. Der Empfänger D1 ist für das Licht beider Sender (H1 und K) empfindlich. Auf diese Weise lassen sich ein Analyt oder Bestandteil eines Gases in der Messstrecke, beispielsweise einer Küvette, detektieren. Hierbei wird das Kompensationssignal 12 ebenfalls durch die Messstrecke (Küvette) geleitet. Obwohl damit die zweite Übertragungsstrecke in einigen - allerdings hier irrelevanten Eigenschaften - nicht mehr bekannt ist, lässt sich mittels des erfindungsgemäßen Verfahrens eine optimierte Regelung erzielen und ein Analyt in Gas detektieren.

Hier ist hervorzuheben, dass beide Übertragungskanäle im gleichen Medium liegen und sich hier nur die Wellenlängen unterscheiden. Insofern ist hier der Raummultiplex durch einen Wellenlängenmultiplex des Trägerlichtes ersetzt.

Wenn also in diesem Dokument von unterschiedlichen Übertragungskanälen die Rede ist, ist dieses Wort "unterschiedlich" auf einen irgendwie gearteten Multiplex zu beziehen.

Fig. 15b zeigt ein System mit zwei parallelen Regelungssträngen und zwei Sendern H1, H2, die jeweils als Laserdioden ausgebildet sind. Die Dioden strahlen mit unterschiedlichen Absorptionswellenlängen. Die Kompensationsdiode K strahlt auf einer Wellenlänge, die knapp neben den Absorptionswellenlängen liegt. Somit lässt sich ein zweikanaliger Gassensor aufbauen. In der Weiterführung dieses Gedankens lassen sich mehrkanalige Gassensoren denken.

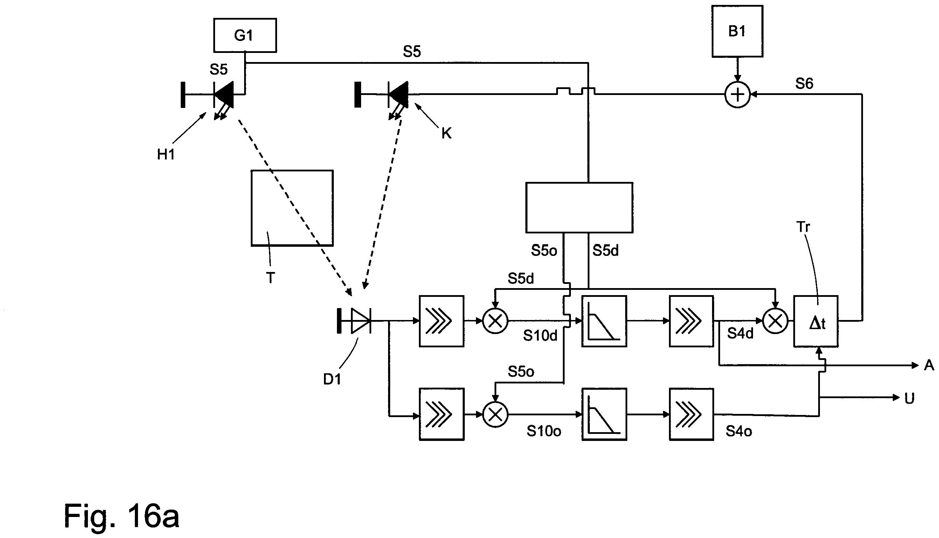

Ein weiteres Einsatzgebiet des erfindungsgemäßen Sensorsystems ist eine optische Time-of-Flight-Messung, wie sie beispielsweise zur Abstandsmessung eingesetzt wird. Ein derartiges System ist in den Figuren 16a bis c in unterschiedlichen Ausführungen gezeigt. In Fig. 16a ist eine einfache Ausführungsform gezeigt, bei der der Sender H1 wie auch der Kompensationssender K jeweils als Dioden ausgebildet sind. Der Empfänger ist eine Photodiode. Ein Messobjekt in der Übertragungsstrecke zwischen Sender H1 und Empfänger D1 soll vermessen werden. In der gezeigten Ausführungsform wird zur Bildung des Kompensationssignals S3 ein geregeltes Verzögerungsglied Tr eingesetzt, das über die detektierte Verzögerung, die auf dem Ausgangssignal S4o basiert, geregelt wird. Es findet somit eine Verzögerung des Vorsignals S6 während der Rücktransformation statt. Die Verzögerung des Kompensationssignals ermöglicht somit einen Ausgleich der im Übertragungskanal stattfindenden Verzögerungen. Im Gegensatz zum Stand der Technik, der eine Phasenregelung benutzt, ermöglicht eine Verzögerung die Nutzung breitbandiger multifrequenter Signale und damit eine wesentlich verbesserte Störunterdrückung gegenüber einem Störer im Übertragungskanal.

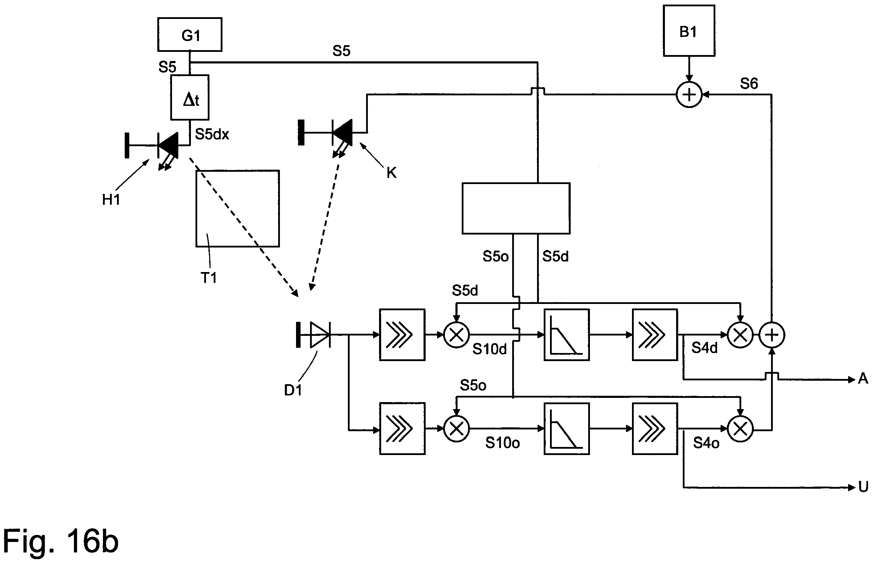

Fig. 16b zeigt ein abgewandeltes Time-of-Flight-Messsystem ohne die Verzögerung während der Rücktransformation. Allerdings erfolgt bei diesem System eine Bereichsumschaltung, so dass eine Abstandsmessung im Nahbereich möglich wird. Dazu wird die Sendediode H1 nicht mit dem Speisesignal S5 gespeist, sondern mit einem verzögerten Speisesignal S5dx. Hierdurch wird dem System ein größerer Abstand vorgetäuscht. Das System gerät insbesondere bei kleinen Abständen nicht an seine Systemgrenzen. Somit lässt sich eine Optimierung des Arbeitspunkts des Empfängers erzielen. Die Verfälschung des Ausgangswertes ist durch Wahl der Verzögerung $\Delta t$ vorbestimmt und daher einfach durch Subtraktion korrigierbar.

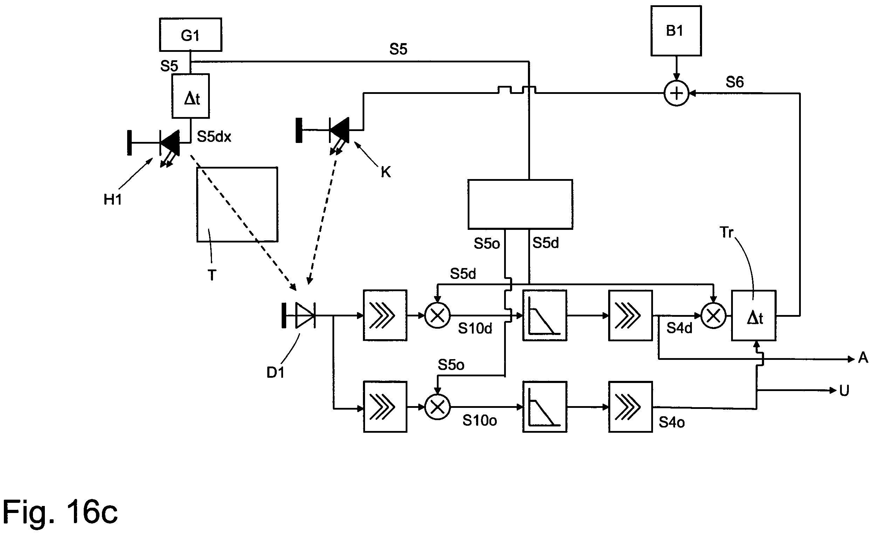

Fig. 16c zeigt eine weitere Abwandlung eines Time-of-Flight-Messsystems, das eine optimierte Abstandsmessung im Nahbereich des Empfängers D1 ermöglicht. Hierbei sind die beiden vorher gezeigten Systeme miteinander kombiniert. Es erfolgt also eine Verzögerung des Speisesignals zur Speisung der Sendediode. Gleichzeitig erfolgt eine mittels des orthogonalen Ausgangssignals geregelte Verzögerung in der Rücktransformation zur Erzeugung des Kompensationssignals.

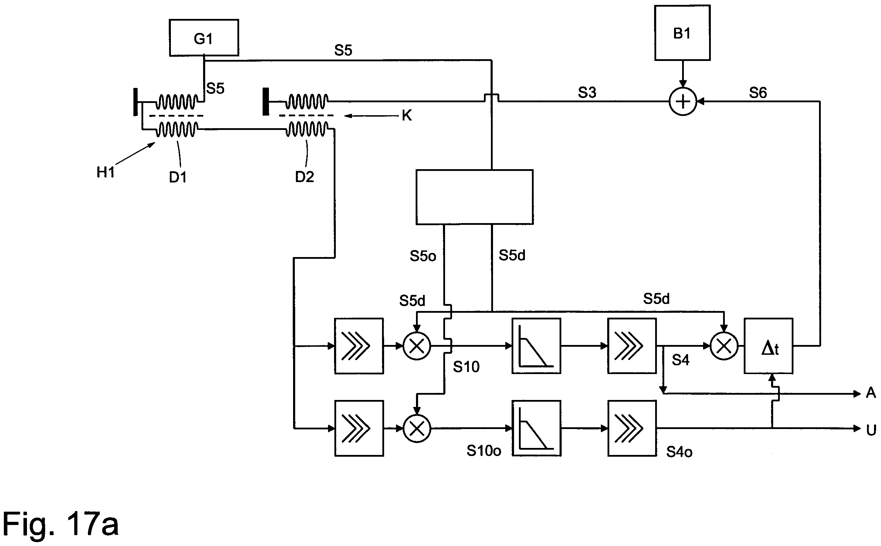

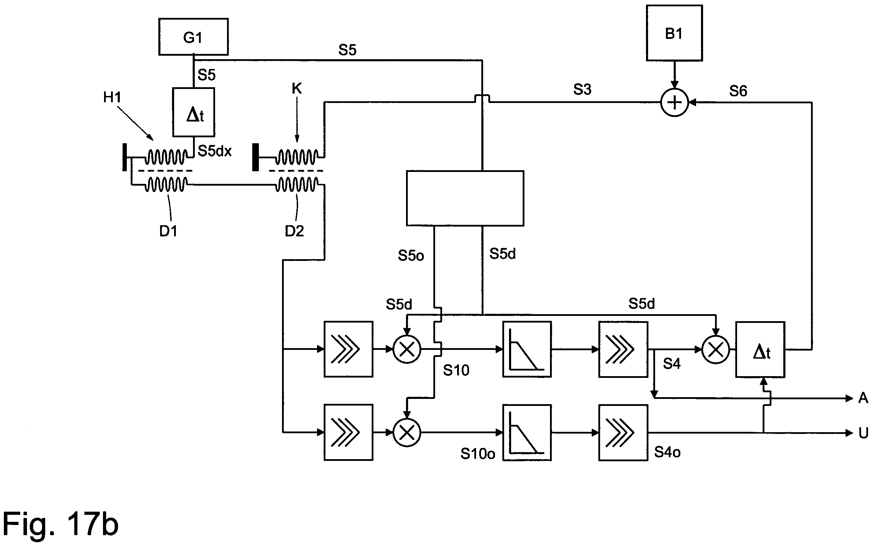

Die Figuren 17a und b zeigen ein Sensorsystem zur Messung mit elektromagnetischen Wellen - hier beispielsweise basierend auf TM-Moden. Dazu wird eine kompensierende magnetische Antenne als Sender H1 sowie als Kompensationssender K eingesetzt. Die Antennen haben jeweils das Empfangsglied, also den Empfänger D1 integriert. Eine Unsymmetrie kann detektiert werden, wenn das Signal S10 oder das orthogonale Signal S10o von Null verschieden ist. Dies ermöglicht bei entsprechender Ausgestaltung der magnetischen Antennen die Messung von Metallen (z.B. als Induktiv-Sensor) und die Messung von Kern-Spin-Resonanzen.

Fig. 17b zeigt eine Erweiterung des Systems aus Fig. 17a durch ein Verzögerungsglied bei der Speisung des Senders H1. Die kompensierende magnetische Antenne wird mit einem um $\Delta t$ verzögerten Speisesignal S5dx gespeist, was die Möglichkeit einer Bereichsumschaltung eröffnet.

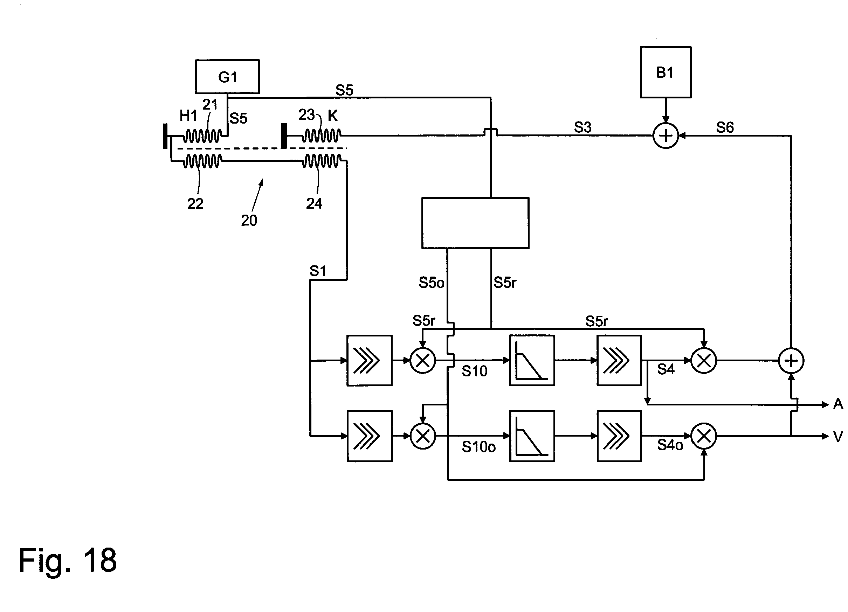

Fig. 18 zeigt ein erfindungsgemäßes Messsystem mit einer kompensierten magnetischen Antenne 20 aus vier Spulen. Das Speisesignal S5 wird in eine Sendespule 21 eingespeist. Diese koppelt induktiv mit einer ersten Empfangsspule 22 und in einem schwächeren Maße mit einer zweiten Empfangsspule 24. Das Kompensationssignal S3 wird in die Kompensationsspule 23 eingespeist. Das Feld der Kompensationsspule 23 koppelt in starkem Maße in die zweite Empfangsspule 24 ein und in schwächerem Maße in die erste Empfangsspule 22. Das System regelt sich so aus, dass das Signal S1 nahezu Null wird.

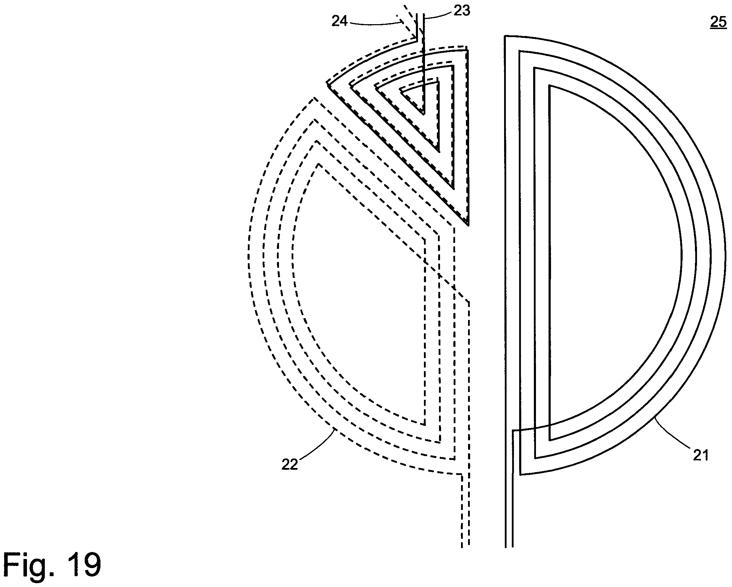

Fig. 19 zeigt eine beispielhafte Planarspulenanordnung 25 für die Verwendung auf einer doppelseitigen Platine. Obenstehend sind im Uhrzeigersinn gezeichnet: Die Sendespule 21 des Signals S3, die erste Empfangsspule 22 (gestrichelt) und die zweite Empfangsspule 24 (gestrichelt), die mit der Sendespule 23 zum Aussenden des Kompensationssignals S3 überlagert ist. Die Empfangsspulen 22, 24 sind auf der Rückseite der Platine angeordnet.

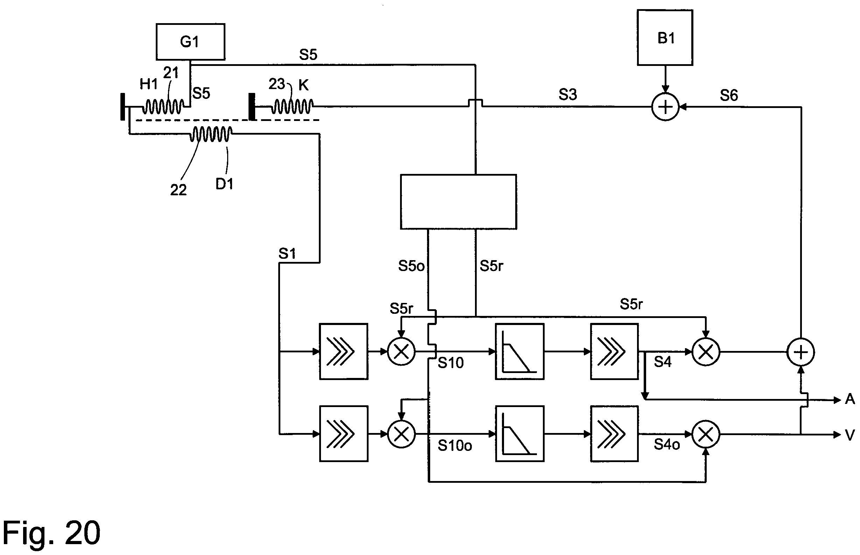

Fig. 20 zeigt ein erfindungsgemäßes Messsystem mit drei Spulen. Hierbei koppeln die beiden Sendespulen 21, 23 in die gleiche Empfängerspule 22 ein.

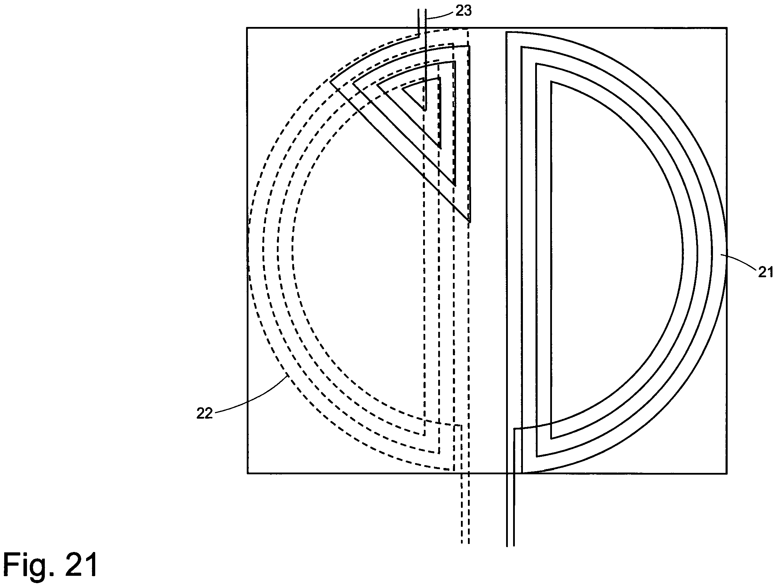

Fig. 21 zeigt eine erfindungsgemäße Spulenanordnung für ein Messsystem gemäß Fig. 20. Obenstehend sind im Uhrzeigersinn gezeichnet: Die Sendespule 21 für das Signal S5 und die Empfangsspule 22, die teilweise mit der Sendespule 23 für das Kompensationssignal S3 überlagert ist.

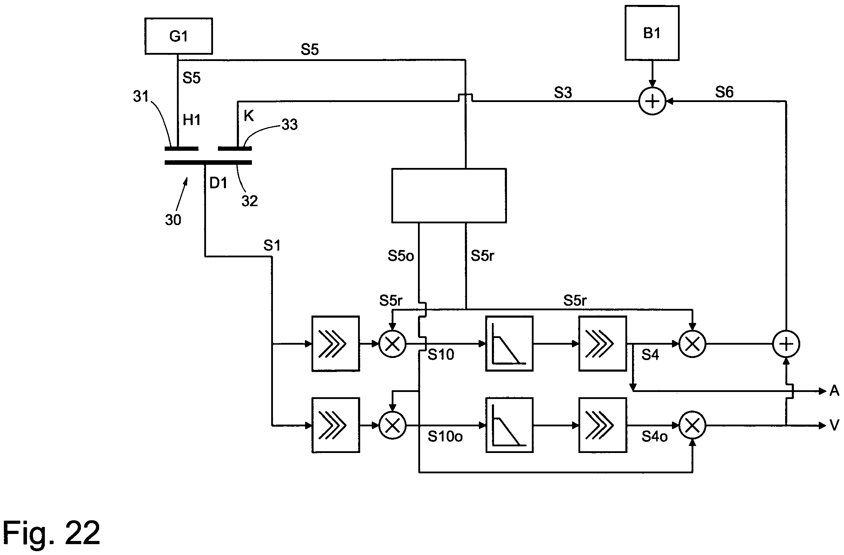

Fig. 22 zeigt ein erfindungsgemäßes Messsystem mit einer kompensierten elektrostatischen Antenne 30 aus drei Elektrodenflächen. Das Speisesignal S5 wird in eine Sendeelektrode 31 eingespeist. Diese koppelt kapazitiv mit einer Empfangselektrode 32. Das Kompensationssignal S3 wird in die Kompensationselektrode 33 eingespeist. Das Feld der Kompensationselektrode 33 koppelt ebenfalls in die Empfangselektrode 32 ein. Das System regelt sich so aus, dass das Signal S1 Null wird.

Es sei an dieser Stelle erwähnt, dass eine Wellenanpassung der Wellenwiderstände von Antennen, Leitungen und Aus- und Eingangswiderständen der Schaltungen (z.B. gemäß den Figuren 17 bis 22) typischer Weise sinnvoll ist. Der Stand der Technik nimmt sich dieses Problems nicht an. Messsysteme sind deshalb in der Regel nicht produzierbar und damit nicht wirtschaftlich verwertbar.

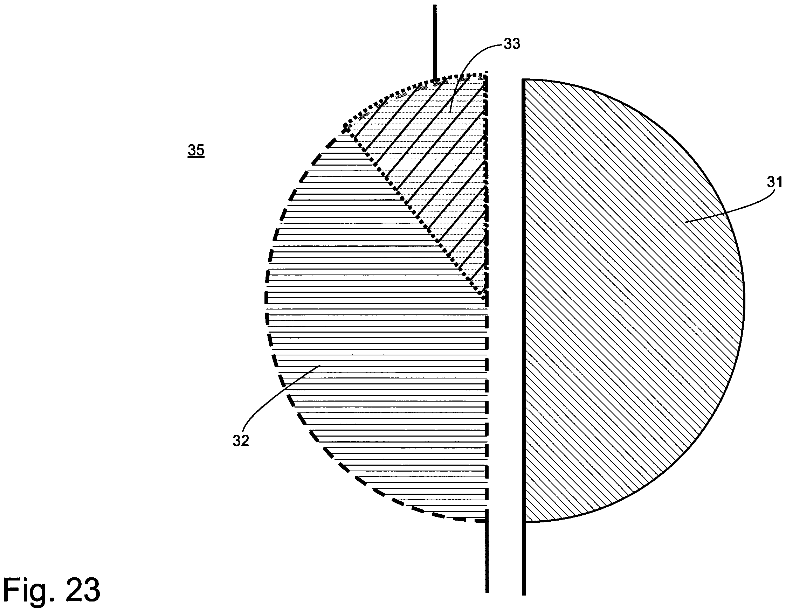

Fig. 23 zeigt eine beispielhafte Planarelektrodenanordnung 35 für die Verwendung auf einer doppelseitigen Platine. Obenstehend sind im Uhrzeigersinn gezeichnet: Die Sendeelektrode 31 für das Signal S5 und die Empfangselektrode 32, die teilweise mit der Sendeelektrode 33 für das Kompensationssignal S3 überlagert ist.

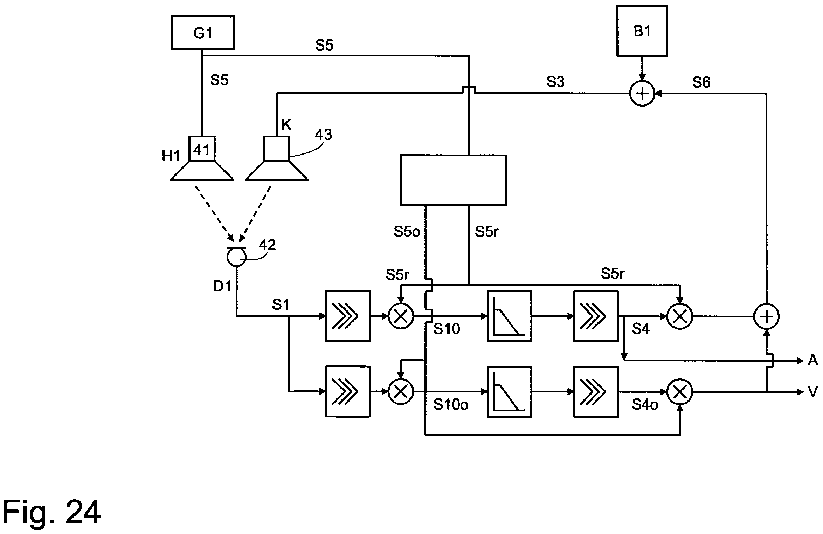

Fig. 24 zeigt ein erfindungsgemäßes Messsystem mit einer kompensierten elektroakustischem System aus zwei Lautsprechern 41, 43 und einem Mikrofon 42 als Empfänger D1. Das Speisesignal S5 wird in einen Sendelautsprecher 41 eingespeist. Dieser koppelt akustisch mit dem Empfangsmikrofon 42. Das Kompensationssignal S3 wird in die Kompensationslautsprecher 43 eingespeist. Das Schallfeld des Kompensationslautsprechers 43 koppelt ebenfalls in das Empfangsmikrofon 42 ein. Das System regelt sich so aus, dass das Signal S1 nahezu Null wird.

Es sei an dieser Stelle auch erwähnt, dass eine akustische Wellenanpassung der akustischen Wellenwiderstände von Lautsprechern, akustischen Leitungen etc. typischer Weise sinnvoll ist. Der Stand der Technik nimmt sich dieses Problems nicht an. Messsysteme sind deshalb in der Regel nicht produzierbar und damit nicht wirtschaftlich verwertbar.

**Patentansprüche**

1. Verfahren zur Vermessung der Übertragungseigenschaften einer ersten Übertragungsstrecke eines auf einer rückgekoppelten Kompensation beruhenden Messsystems zwischen einem ersten Sender und einem Empfänger, wobei

   - der erste Sender (H1) ein erstes Signal (12) in die Übertragungsstrecke hineinsendet, das nach Durchgang durch mindestens einen Teil der ersten Übertragungsstrecke (T1) von dem Empfänger (D1) detektiert wird,
   - ein Kompensationssender (K) ein zweites Signal (12) in eine zweite Übertragungsstrecke hineinsendet, das von dem Empfänger (D1) nach Durchgang durch die zweite Übertragungsstrecke detektiert wird,
   - in dem Empfänger (D1) sich das erste Signal (I1) und das zweite Signal (12) linear, insbesondere summierend, überlagern und daraus ein Empfängerausgangssignal (S1) gebildet wird,
   **gekennzeichnet durch** die folgenden Schritte:
   - Erzeugen eines Speisesignals (S5) mittels eines Generators (G1), wobei das Speisesignal (S5) und das Empfängerausgangssignal (S1) je einen Vektor in einem Prä-Hilbert-Raum bilden;
   - Speisen des ersten Senders (H1) mit dem Speisesignal (S5);
   - Durchführen einer Hilbert-Projektion zwischen dem Empfängerausgangssignal (S1) des Empfängers (D1) und dem Speisesignal (S5), so dass ein Projektionsbildsignal (S10) erzeugt wird;
   - Bilden eines auf dem Projektionsbildsignal (S10) basierenden Ausgangssignals (S4);
   - Durchführen einer zumindest teilweisen Rücktransformation des Ausgangssignals (S4) mit dem Speisesignal (S5) derart, dass ein Vorsignal (S6) gebildet wird, wobei die Rücktransformation bevorzugt eine Multiplikation ist;
   - Erzeugen eines Kompensationssignals (S3) aus dem Vorsignal (S6);
   - Speisen des Kompensationssenders (K) mit dem Kompensationssignal (S3) zur rückkoppelnden Regelung des Empfängerausgangssignals (S1).

2. Verfahren nach Anspruch 1, **dadurch gekennzeichnet, dass** das Speisesignal (S5) ein moduliertes und/oder bandbegrenztes und/oder ungetaktetes Signal, insbesondere ein Zufallssignal und/oder Pseudozufallssignal und/oder ein auf einem Spreizcode basierendes Signal und/oder ein Rauschsignal ist.

3. Verfahren nach einem der vorherigen Ansprüche, **dadurch gekennzeichnet, dass** das Durchführen der Hilbert-Projektion durch die Bildung eines Skalarprodukts erfolgt und das Skalarprodukt bevorzugt gebildet wird durch:

   - Multiplizieren des Empfängerausgangssignals (S1) mit dem Speisesignal (S5) und bilden eines Detektionssignals (S9); und
   - Filtern des Detektionssignals (S9) in einem Filter (F1), so dass aus dem gefilterten Filterausgangssignal das Projektionsbildsignal (S10) erzeugt wird.

4. Verfahren nach einem der vorhergehenden Ansprüche, **gekennzeichnet durch** Verstärken des Projektionsbildsignals (S10) mittels eines Verstärkers (V1) zu dem Ausgangssignal (S4).

5. Verfahren nach einem der vorhergehenden Ansprüche, **gekennzeichnet durch** Erzeugen des Kompensationssignals (S3) **durch** Addition des Vorsignals (S6) mit einem Bias-Wert (B1).

6. Verfahren nach einem der vorhergehenden Ansprüche, **dadurch gekennzeichnet, dass** zu dem Speisesignal (S5) ein Bias-Wert (B5) addiert wird, bevor das Speisesignal (S5) den ersten Sender (H1) speist.

7. Verfahren nach einem der vorherigen Ansprüche, **dadurch gekennzeichnet, dass** das Speisesignal (S5) ein bandbegrenztes Speisesignal ist, das eine obere Grenzfrequenz $\omega_{max}$ und eine untere Grenzfrequenz $\omega_{min}$ hat und dessen untere Grenzfrequenz $\omega_{min}$ größer als die halbe obere Grenzfrequenz $\omega_{max}$ ist.

8. Verfahren nach einem der vorhergehenden Ansprüche, **dadurch gekennzeichnet, dass** der Filter (F1) ein linearer Filter ist, der bevorzugt nur solche Frequenzanteile durchlässt, deren Frequenzbetrag kleiner oder gleich der Hälfte des Abstands zwischen oberer Grenzfrequenz $\omega_{max}$ und unterer Grenzfrequenz $\omega_{min}$ des Speisesignals (S5) ist.

9. Verfahren nach einem der vorhergehenden Ansprüche, **dadurch gekennzeichnet, dass** das Speisesignal (S5) und der Filter (F1) so gewählt sind, dass bei Filterung eines mit dem Speisesignal (S5) skalarmultiplizierten Störsignals (15) mittels des Filters (F1) das Ausgangssignal (S10) des Filters (F1) minimal wird.

10. Verfahren nach einem der vorhergehenden Ansprüche, **gekennzeichnet durch** Vermessen des Filters (F1) zum Erkennen eines Störsignals (15) in dem Empfängerausgangssignal (S1) mit einem bekannten, insbesondere konstanten Speisesignal (S5), das bevorzugt gleich eins gesetzt ist.

11. Verfahren nach einem der vorhergehenden Ansprüche, **dadurch gekennzeichnet, dass** zu dem Speisesignal (S5) ein orthogonales Basissignal (S5o) gebildet wird, wobei das orthogonale Basissignal (S5o) bevorzugt aus der Differenz eines um einen Zeitraum $\Delta$t gegenüber dem Speisesignal (S5) vorlaufenden Signal (S5v) und eines um den Zeitraum $\Delta$t dem Speisesignal (S5) nachlaufenden Signal (S5d) gebildet wird oder bevorzugt aus der Differenz des Speisesignals (S5) und eines um den Zeitraum $\Delta$t dem Speisesignal (S5) nachlaufenden Signal (S5d) gebildet wird.

12. Verfahren nach einem der vorhergehenden Ansprüche, **gekennzeichnet durch** die weiteren Schritte:

   - Erzeugen eines zu dem Speisesignal (S5) orthogonalen Basissignals (S5o)
   - Bilden des Skalarprodukts aus dem Empfängerausgangssignal (S1) und dem orthogonalen Basissignal (S5o), so dass ein orthogonales Projektionsbildsignal (S10o) erzeugt wird;
   - optionales Verstärken des orthogonalen Projektionsbildsignals (S10o) zu einem Ausgangssignal (S4o) mittels eines Verstärkers (V2);
   - Multiplizieren eines auf dem orthogonalen Projektionsbildsignal (S10) basierenden Ausgangssignals (S4o) mit dem Basissignal (S5o) zu einem Vorsignal (S6o);
   - Addieren des orthogonalen Vorsignals (S6o) zu einem Vorsignal (S6), dass **durch** Multiplikation des Speisesignals (S5) mit dem Ausgangssignal (S4) gebildet wird, wobei **durch** die Addition des Vorsignals (S6) mit dem orthogonalen Vorsignal (S6o) und optional einem Bias-Wert (B1) das Kompensationssignal (S3) erzeugt wird.

13. Verfahren nach dem vorhergehenden Anspruch, **dadurch gekennzeichnet, dass** das Skalarprodukt aus dem Empfängerausgangssignal (S1) und dem orthogonalen Basissignal (S5o) gebildet wird durch:

- Multiplizieren des Empfängerausgangssignals (S1) mit dem orthogonalen Basissignal (S5o), so dass ein orthogonales Detektionssignal (S9o) gebildet wird;
- Filtern des orthogonalen Detektionssignals (S9o) mittels eines Filters (F2).

**14.** Verfahren nach dem vorhergehenden Anspruch, **gekennzeichnet durch** die folgenden Schritte:

- Bilden eines zu dem Speisesignal (S5) um einen ersten Zeitraum $\Delta t_1$ nachlaufenden Impuls (S5d1), eines um einen zweiten Zeitraum $\Delta t_2$ nachlaufenden Impuls (S5d2) und eines um einen dritten Zeitraum $\Delta t_3$ nachlaufenden Impuls (S5d3),
wobei der Zeitraum $\Delta t_2$ größer ist als der Zeitraum $\Delta t_1$ und der Zeitraum $\Delta t_3$ größer oder gleich dem Zeitraum $\Delta t_2$ ist;
- Bilden eines Basissignals (S5o1) aus dem Speisesignal (S5);
- Bilden eines zu dem Signal (S5o1) orthogonalen Basisignals (S5o2); wobei insbesondere

    a. das orthogonale Basissignal (S5o1) als Differenz der Signale (S5d1) und (S5d2) gebildet werden kann und/oder
    b. das orthogonale Basissignal (S5o2) identisch mit dem orthogonalen Basissignal (S5d3) sein kann und/oder
    c. der Zeitraum $\Delta t_1 = 0$ sein kann und/ oder
    d. die Zeiträume $\Delta t_2$, $\Delta t_3$ gleich sein können

- Weiterverarbeiten des orthogonalen Basissignals (S5o1) zu einem orthogonalen Vorsignal (S6o1);
- Weiterverarbeiten des orthogonalen Basissignals (S5o2) zu einem orthogonalen Vorsignal (S6o2);
- Bilden des Kompensationssignals (S3), das dem Kompensationssender (K) zugeführt wird, aus den Vorsignalen (S6, S6o1, S6o2), bevorzugt **durch** Addition.

**15.** Verfahren nach einem der vorhergehenden Ansprüche 12 bis 14, **gekennzeichnet durch**

- Erzeugen mehrerer orthogonaler Basissignale (S5oi);
- Generieren mehrerer orthogonaler Vorsignale (S6oi),
- Addieren wenigstens eines orthogonalen Vorsignals (S6oi) zu dem
Vorsignal (S6) und dem optionalen Bias-Wert (B1),
wobei bevorzugt mehrere Verstärker (V2) verwendet werden.

**16.** Verfahren nach Anspruch 15, dadurch charakterisiert, dass mindestens zwei der zu dem Speisesignal (S5) orthogonalen Basissignale (S5o) zueinander orthogonal sind.

**17.** Verfahren nach einem der vorhergehenden Ansprüche, **gekennzeichnet durch** die weiteren Schritte:

- Erzeugen eines zu dem Speisesignal (S5) orthogonalen Basissignals (S5o):
- Bilden des Skalarprodukts aus dem Empfängerausgangssignal (S1) und dem orthogonalen Basissignal (S5o), so dass ein orthogonales Projektionsbildsignal (S10o) erzeugt wird;
- Verstärken des orthogonalen Projektionsbildsignals (S10o) zu einem orthogonalen Ausgangssignal (S4o) insbesondere mittels eines Verstärkers (V2);
- Verzögern des weiterverarbeiteten Empfängerausgangssignals (S1) in Abhängigkeit von dem orthogonalen Ausgangssignals (S4o), wobei die Verzögerung in der Weiterverarbeitungskette des Empfängerausgangssignals (S1) zum dem Kompensationssignal (S3) **durch** Verzögerung wenigstens eines der folgenden Signale erfolgt:

    1. Verzögerung des Speisesignals (S5), das für die Rücktransformation verwendet wird und/oder
    2. Verzögerung des Vorsignals (S6) während der Rücktransformation

- Weiterverarbeiten der jeweiligen verzögerten Signale anstelle der nicht verzögerten Signale.

**18.** Verfahren nach einem der vorhergehenden Ansprüche **dadurch gekennzeichnet, dass** mindestens ein erster Sender (H1) nicht direkt durch das Speisesignal (S5) angesteuert wird, sondern in zumindest einer Betriebslage durch ein gegenüber (S5) verzögertes Signal (S5dx) angesteuert werden kann.

**19.** Verfahren nach dem vorgehenden Anspruch **gekennzeichnet durch** die weiteren Schritte:

- Erzeugen eines zu dem Speisesignal (S5) orthogonalen Basissignals (S5o);
- Bilden des Skalarprodukts aus dem Empfängerausgangssignal (S1) und dem orthogonalen Basissignal (S5o), so dass ein orthogonales Projektionsbildsignal (S10o) erzeugt wird;
- Bilden eines orthogonalen Ausgangssignal (S4o) **durch** Verstärken des orthogonalen Projektionsbildsignals (S10o) insbesondere mittels eines Verstärkers (V2);
- Erzeugen eines zu dem Speisesignals (S5) geregelt verzögerten Speisesignals (S5dx) **durch** Verzögern des Speisesignals (S5) in Abhängigkeit von dem Ausgangssignal (S4o); und
- Speisen des ersten Senders (H1) mit dem verzögerten Speisesignal (S5dx).

**20.** Verfahren nach einem der Ansprüche 18 oder 19, **dadurch gekennzeichnet, dass** das Speisesignal (S5) getaktet oder monofrequent ist und das Bilden des verzögerten Speisesignals (S5dx) durch Verzögerung des Speisesignals (S5) mittels einer Phasenschiebung erfolgt.

**21.** Verfahren nach einem der vorhergehenden Ansprüche, **dadurch gekennzeichnet, dass** das Speisesignal (S5) mit einem Zufallsgenerator oder einem Quasizufallsgenerator erzeugt wird, wobei der Quasizufallsgenerator bevorzugt ein rückgekoppeltes Schieberegisters umfasst und das Speisesignal (S5) bevorzugt aus einem einfach primitiven Generatorpolynom gebildet wird.

**22.** Verfahren nach einem der vorhergehenden Ansprüche, **dadurch gekennzeichnet, dass** durch die Erzeugung mehrerer, jeweils um den Zeitraum Δt gegenüber dem Speisesignal (S5) verschobener, bevorzugt nachlaufender, Signale ein Objekt (O) detektiert werden kann, das in der ersten Übertragungsstrecke (T1) angeordnet ist.

**23.** Verfahren nach einem der vorhergehenden Ansprüche, **dadurch gekennzeichnet, dass** das Ausgangsignal (S4) und/oder das orthogonale Ausgangsignal (S4o) als Messwert weiterverarbeitet oder ausgegeben wird.

**24.** Verfahren nach einem der vorhergehenden Ansprüche, **dadurch gekennzeichnet, dass** wenigstens Teile des Verfahrens digitalisiert durchgeführt werden, bevorzugt mittels einer FSM (Finite State Machine), in einer HMM (Hidden Markov Model) oder einem Petri-Netz, oder ein Neuronales Netz auf einem Microrechner oder einem Signalprozessor oder einem Analogrechner.

**25.** Sensorsystem **dadurch gekennzeichnet, dass** es ausgebildet und eingerichtet ist, um ein Verfahren nach einem oder mehreren der vorhergehenden Ansprüche durchzuführen.

**26.** Sensorsystem mit einem ersten Sender (H1), einem Kompensationssender (K) und einem Empfänger (D1) zur Vermessung der Übertragungseigenschaften einer ersten Übertragungsstrecke zwischen einem ersten Sender (H1) und einem Empfänger (D1), wobei

- der erste Sender (H1) mit einem Speisesignals (S5) eines Generators (G1) gespeist wird und dazu ausgebildet und eingerichtet ist, um ein erstes Signal in die Übertragungsstrecke (T1) hineinzusenden, das nach Durchgang durch mindestens einen Teil der ersten Übertragungsstrecke (T1) von dem Empfänger (D1) detektiert wird,
- der Kompensationssender (K) ausgebildet und eingerichtet ist, um ein zweites Signal (I2) in eine zweite Übertragungsstrecke hineinzusenden, das von dem Empfänger (D1) nach Durchgang durch die zweite Übertragungsstrecke detektiert wird,
- der Empfänger (D1) ausgebildet und eingerichtet ist, um das erste Signal (I1) und das zweite Signal (I2) linear, insbesondere summierend, zu überlagern und daraus ein Empfängerausgangssignal (S1) zu bilden,
wobei das Speisesignal (S5) und das Empfängerausgangssignal (S1) je einen Vektor in einem Prä-Hilbert-Raum bilden;
umfassend
- eine Verarbeitungseinheit (PU), die dazu ausgebildet und eingerichtet ist, um eine Hilbert-Projektion des Empfängerausgangssignals (S1) des Empfängers (D1) auf das Speisesignal (S5) derart durchzuführen, so dass ein Projektionsbildsignal (S10) erzeugt wird;
- einen Verstärker (V1), der dazu ausgebildet und eingerichtet ist, um das Projektionsbildsignal (S10) zu verstärken und das Ausgangssignal (S4) zu bilden;
wobei
- in der Verarbeitungseinheit (PU) eine Rücktransformation des Ausgangssignals (S4) mit dem Speisesignal (S5) erfolgt, bevorzugt die beiden Signale (S4) und (S5) multipliziert werden, und ein Vorsignal (S6) gebildet wird, das in ein Kompensationssignal (S3) weiterverarbeitet wird, mit dem der Kompensationssender (K) zur rückkoppelnden Regelung des Empfängerausgangssignals (S1) gespeist wird.

27. Sensorsystem nach dem vorhergehenden Anspruch, **dadurch gekennzeichnet, dass**

- die Verarbeitungseinheit (PU) einen Filter (F1) umfasst;
- die Hilbert-Projektion in der Verarbeitungseinheit (PU) durch Bildung eines Skalarprodukts erfolgt, in dem das Empfängerausgangssignal (S1) mit dem Speisesignal (S5) multipliziert und ein Detektionssignal (S9) gebildet wird; und
- in dem Filter (F1) das Detektionssignal (S9) gefiltert wird, so dass am Ausgang des Filters (F1) das Projektionsbildsignal (S10) erzeugt wird.

28. Sensorsystem nach einem der vorhergehenden Ansprüche, **dadurch gekennzeichnet, dass**

- eine Mehrzahl von Generatoren (Gi) mehrere Speisesignale (S5i) erzeugen;
- eine Mehrzahl von ersten Sendern (Hi) mit jeweils einem Speisesignal (S5i) gespeist werden;
- eine Mehrzahl von Übertragungsstrecken bestehen, durch die je ein Sendesignal (I4i) eines der Sender (Hi) zu dem Empfänger (D1) übertragen wird;
- in dem Empfänger (D1) die ersten Signale (I4i) der ersten Sender (Hi) mit dem zweiten Signal (12) des Kompensationssenders (K) zu dem Empfängerausgangssignal (S1) überlagert werden;
- in der Verarbeitungseinheit für jedes erste Speisesignal (S5i) jedes ersten Senders (Hi) ein Vorsignal (S6i) generiert wird, aus dem das Kompensationssignal (S3) gebildet wird.

29. Sensorsystem nach einem der vorhergehenden Ansprüche, **dadurch gekennzeichnet, dass**

- das Sensorsystem mehrere Empfänger (Di) und mehrere Kompensationssender (Ki) umfasst, wobei jedem Empfänger (Di) ein Kompensationssender (Ki) zugeordnet ist;
- eine Mehrzahl von Übertragungsstrecken gebildet werden, durch die das Sendesignal des ersten Senders (H1) zu je einem Empfänger (Di) übertragen wird;
- in jedem Empfänger (Di) das erste Signal (14) des ersten Senders (H1) mit je einem zweiten Signal (I2i) eines Kompensationssenders (Ki) zu dem Empfängerausgangssignal (S1i) überlagert wird;
- in der Verarbeitungseinheit für jeden Sender (H2i) ein Kompensationssignal (S3i) zur rückkoppelnden Kompensation der Ausgangssignale der Empfänger (Di) erzeugt wird, mit dem der jeweilige Kompensationssender (Ki) gespeist wird.

30. Sensorsystem nach einem der vorhergehenden Ansprüche, **dadurch gekennzeichnet, dass**

- das Sensorsystem mehrere Empfänger (Di) und wenigstens einem, bevorzugt mehrere Kompensationssender (Ki) umfasst, wobei wenigstens zwei Empfängern (Di) ein Kompensationssender (Ki) gemeinsam zugeordnet ist;
- eine Mehrzahl von Übertragungsstrecken (T1i) gebildet werden, durch die das Sendesignal des ersten Senders (H1) zu je einem Empfänger (Di) übertragen wird;
- in jedem Empfänger (Di) das erste Signal (I4) des ersten Senders (H1) mit je einem zweiten Signal (I2i) eines Kompensationssenders (Ki) zu dem Empfängerausgangssignal (S1i) überlagert wird;
- in der Verarbeitungseinheit für jeden Kompensationssender (Ki) ein Kompensationssignal (S3i) zur rückkoppelnden Kompensation der Ausgangssignale der Empfänger (Di) erzeugt wird, mit dem der jeweilige Kompensationssender (Ki) gespeist wird; und
- für die Bildung des Kompensationssignals (S3i) jeweils zwischen den Verarbeitungseinheiten der Signale (S1i) der Empfänger (Di), die sich mindestens einen zweiten Kompensationssender (Ki) teilen, im Zeitmultiplex hin und hergeschaltet wird, wobei Verarbeitungseinheiten, die infolge des Zeitmultiplexes zeitweilig nicht zum Kompensationssignal (S3i) beitragen, so geschaltet werden, dass deren innere Zustände und Ausgangswerte sich während dieser Zeiten nicht verändern, und Verarbeitungseinheiten, die infolge des Zeitmultiplexes zeitweilig zum Kompensationssignal S3i beitragen, sich für die Dauer dieses Beitrags so verhalten, als ob kein Zeitmultiplex stattfinden würde.

31. Sensorsystem nach einem der vorhergehenden Ansprüche, **dadurch gekennzeichnet, dass** die Signalübertragung zwischen einem ersten Sender (H1) und einem Empfänger (D1) elektronisch, kapazitiv, induktiv, elektromagnetisch, mittels der Übertragung elektrischen Stromes, der Übertragung elektrischer Spannung, mittels der Übertragung elektrischer oder thermischer Leistung, akustisch, fluidisch, pneumatisch, hydraulisch oder durch Veränderung der physikalischen oder chemischen Eigenschaften eines sich bewegenden Mediums, insbesondere Wasser und Öle, oder eines Festkörpers erfolgt.

**32.** Sensorsystem nach einem der vorhergehenden Ansprüche, **dadurch gekennzeichnet, dass** mindestens eine der folgenden Größen der Eigenschaften der Übertragungsstrecke (T1) oder von Objekten (O) oder Medien in der Übertragungsstrecke (T1) erfasst wird:

- Brechungsindices
- Objektdichte
- Objektgröße
- Objektabstand
- Objektzusammensetzung
- Objektlage im Raum
- Objektorientierung
- Transparenz oder Transmission (insbesondere spektral- oder farbabhängig)
- Dämpfung oder Absorption (insbesondere spektral- oder farbabhängig)
- Reflektivität oder Reflektion (insbesondere spektral- oder farbabhängig)
- Phasenverzögerung (insbesondere spektral- oder farbabhängig)
- Kernspinwechselwirkungen (insbesondere -resonanzen)
- Permeabilitäten
- Dielektrizitätswerte
- Leitfähigkeiten, Widerstandswerte oder Widerstandsverteilungen
- Geschwindigkeitsverteilungen

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15a

EP 2 631 674 A1

Fig. 15b

Fig. 16a

EP 2 631 674 A1

Fig. 16b

Fig. 16c

Fig. 17a

Fig. 17b

Fig. 18

Fig. 19

EP 2 631 674 A1

Fig. 20

Fig. 21

Fig. 22

Fig. 23

Fig. 24

EUROPÄISCHER RECHERCHENBERICHT

**Nummer der Anmeldung**

EP 12 15 6720

Europäisches Patentamt
European Patent Office
Office européen des brevets

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 100 01 955 A1 (REIME GERD [DE]) 19. Juli 2001 (2001-07-19) * Zusammenfassung; Abbildung 1 * * Spalte 3, Zeile 1 - Spalte 4, Zeile 9 * ----- | 1-32 | INV. G01S17/46 G01S17/10 G01S7/487 G01S7/497 |
| A | EP 2 159 600 A1 (ELMOS SEMICONDUCTOR AG [DE]) 3. März 2010 (2010-03-03) * Zusammenfassung * ----- | 1-32 | |
| A | DE 10 2010 028967 A1 (BALLUFF GMBH [DE]) 27. Oktober 2011 (2011-10-27) * Zusammenfassung * ----- | 1-32 | |
| A | DE 10 2007 048402 A1 (REIME GERD [DE]) 16. April 2009 (2009-04-16) * Zusammenfassung * ----- | 1-32 | |

**RECHERCHIERTE SACHGEBIETE (IPC)**

G01S
H03K
G01B
G01D
G01N
G01V

Der vorliegende Recherchenbericht wurde für alle Patentansprüche erstellt

| Recherchenort | Abschlußdatum der Recherche | Prüfer |
|---|---|---|
| München | 17. September 2012 | Grübl, Alexander |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 12 15 6720

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-09-2012

| Im Recherchenbericht angeführtes Patentdokument | Datum der Veröffentlichung | Mitglied(er) der Patentfamilie | Datum der Veröffentlichung |
|---|---|---|---|
| DE 10001955 A1 | 19-07-2001 | AT 251818 T | 15-10-2003 |
| | | AU 2847301 A | 31-07-2001 |
| | | DE 10001955 A1 | 19-07-2001 |
| | | EP 1269629 A1 | 02-01-2003 |
| | | ES 2208607 T3 | 16-06-2004 |
| | | JP 4574098 B2 | 04-11-2010 |
| | | JP 2003526236 A | 02-09-2003 |
| | | US 2003020004 A1 | 30-01-2003 |
| | | WO 0154276 A1 | 26-07-2001 |
| EP 2159600 A1 | 03-03-2010 | KEINE | |
| DE 102010028967 A1 | 27-10-2011 | DE 102010028967 A1 | 27-10-2011 |
| | | WO 2011134889 A1 | 03-11-2011 |
| DE 102007048402 A1 | 16-04-2009 | DE 102007048402 A1 | 16-04-2009 |
| | | WO 2009049812 A1 | 23-04-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10001955 A1
- DE 10024156 A1
- DE 19839730 C1
- DE 930983 U1
- DE 10001943 C1
- DE 10346741 B3
- DE 102004025345 B3
- DE 102005013325 A1
- DE 102005010745 B3
- DE 102007005187 B4

**In der Beschreibung aufgeführte Nicht-Patentliteratur**

- **I. N. BRONSTEIN ; K. A. SEMENDJAJEW ; G. MUSIOL ; H. MÜHLIG.** Taschenbuch der Mathematik. Verlag Harry, 2005, 635 ff